# EUROPÄISCHE PATENTSCHRIFT

(11) **EP 2 412 650 B1**
(45) Veröffentlichungstag und Bekanntmachung des Hinweises auf die Patenterteilung: **10.07.2013**
(21) Anmeldenummer: 11166392.8
(22) Anmeldetag: 17.05.2011
(51) Int. Cl.: B65G 47/51

(54) **Speichervorrichtung für Behälter und Verfahren zum Speichern von Behältern**
Storage device for containers and method for storing containers
Dispositif de stockage pour récipients et procédé de stockage de récipients

(30) Priorität: 30.07.2010 DE 102010036771; 24.03.2011 DE 102011001532
(43) Veröffentlichungstag der Anmeldung: 01.02.2012
(60) Teilanmeldung: 13166352.8
(73) Patentinhaber: Krones AG, 93073 Neutraubling (DE)
(72) Erfinder: Seger, Martin, 92318, Neumarkt i. d. Opf. (DE); Hüttner, Johann, 84066, Mallersdorf-Pfaffenberg (DE)
(74) Vertreter: Reichert, Werner Franz

(56) Entgegenhaltungen:
- EP-A1- 1 849 725
- CA-A1- 2 364 216
- DE-U1-202004 016 069
- FR-A1- 2 953 502
- US-A1- 2003 209 409

## Beschreibung

Die vorliegende Erfindung betrifft eine Speichervorrichtung für Behälter, die nach dem First In - First Out (FIFO) Prinzip arbeitet. Bei den Behältern kann es sich um Dosen oder Flaschen (Glasflaschen oder Kunststoffflaschen) handeln.

Im Besonderen betrifft die Erfindung eine Speichervorrichtung für Behälter, wobei mindestens ein Einlaufband entlang einer einlaufenden Richtung antreibbar ist. Die Speichervorrichtung umfasst mindestens ein Auslaufband, das entlang einer auslaufenden Richtung antreibbar ist. Das mindestens eine Einlaufband und das mindestens eine Auslaufband sind parallel zueinander angeordnet und bilden ein Speichermodul der Speichervorrichtung. Das Speichermodul besitzt eine Breite und hat an einem ersten Rand das Einlaufband und an einem zweitem Rand das Auslaufband ausgebildet. Ferner ist eine Überleiteinheit vorgesehen, die mindestens eine äußere Führung besitzt. Mittels der äußeren Führung können die Behälter vom Einlaufband auf das Auslaufband des Speichermoduls übergeleitet werden. Mittels der Verschiebeeinheit kann die Überleiteinheit je nach erforderlicher Speicherkapazität in der Speichervorrichtung parallel entlang des Einlaufbandes bzw. des Auslaufbandes verschoben werden.

Ferner betrifft die Erfindung ein Verfahren zum Speichern von Behältern nach dem FIFO-Prinzip.

Eine Behälterbehandlungsanlage umfasst in der Regel mehrere Behälterbehandlungseinrichtungen, die hintereinander angeordnet sind. Behälterbehandlungseinrichtungen können z. B. Streck-Blasmaschinen zur Herstellung von fertigen Kunststoffbehältern (Kunststoffflaschen) aus Vorformlingen sein. Weiter ist es möglich, dass die Behälterbehandlungseinrichtung eine Etikettiermaschine zur Etikettierung der Behälter ist. Eine weitere Möglichkeit der Behälterbehandlungseinrichtung ist eine Reinigungseinrichtung zur Reinigung der Behälter. Hinzu kommt eine Fülleinrichtung zum Füllen der Behälter mit einer Flüssigkeit bzw. einem Behälterinhalt. Letztendlich folgt eine Verpackungseinrichtung zum Verpacken bzw. Zusammenstellen der Behälter zu Gebinden. Zwischen den einzelnen Behälterbehandlungseinrichtungen einer Behälterbehandlungsanlage sind mehrere Transporteinrichtungen vorgesehen. Kommt es beispielsweise bei einer der Behälterbehandlungseinrichtungen, wie beispielsweise der Etikettiereinrichtung, zu einer Störung, ist es erforderlich, dass die Behälter im Prozess zwischengespeichert werden. Durch das Zwischenspeichern erreicht man, dass die der Etikettiereinrichtung vorgeordneten Behälterbehandlungseinrichtungen weiter arbeiten können, um die Behälter lediglich in den Speicher der Transporteinrichtung zu überführen und dort zwischenzuspeichen, bevor sie der Etikettiereinrichtung zugeführt werden. Unabhängig vom Auftreten eines Fehlers in einer Behälterbehandlungsanlage ist es ebenfalls erforderlich, den einzelnen Behälterbehandlungseinrichtungen einer Behälterbehandlungsanlage die Behälter entsprechend der Taktfrequenz der Verarbeitung der Behälter in den einzelnen Behälterbehandlungseinrichtungen zuzuführen. Hierzu ist es erforderlich, dass die zwischen den einzelnen Behälterbehandlungseinrichtungen zwischengeschalteten Transporteinrichtungen (Speichervorrichtungen) je nach erforderlicher Verarbeitungsfrequenz der einzelnen Behälterbehandlungseinrichtungen die Speicherkapazität variieren können.

Die kanadische Patentanmeldung CA 2 364 216 A1 offenbart ein Transportsystem für dynamische Speicherung von Artikeln. Die Länge des Transportsystems kann variabel eingestellt werden, so dass in dem Transportsystem eine bestimmte Anzahl von Behältern gespeichert werden kann. Hierfür ist eine lineare Transportkette zum Transport von Artikeln in das Transportsystem hinein und eine zweite lineare Transportkette zum Transport von Artikeln aus dem Transportsystem heraus vorgesehen. Zwischen der ersten und zweiten linearen Transportkette sind mehrere U-förmige Transportketten angeordnet, die alle zusammen mit einem Motor angetrieben werden und somit alle gleich schnell laufen. Der Boden des U's dieser U-förmigen Transportkette ist jeweils auf der Seite des Einlaufs der Behälter in das Transportsystem angeordnet. Die Öffnung des U's dieser U-förmigen Transportketten ist jeweils auf der dem Einlauf gegenüberliegenden Seite des Transportsystems angeordnet. Die U-Schenkel der U-förmigen Transportketten sind parallel zu der ersten und zweiten linearen Transportkette angeordnet. Über den Transportketten ist ein entlang der Transportketten verschiebbarer Übergabewagen angeordnet. Der Übergabewagen weist so viele Übergabescheiben auf, wie das Transportsystem U-förmige Transportketten hat. Die Übergabescheiben befinden sich jeweils zwischen linearen Transportstrecken der Transportketten. Sobald Artikel von einer der Transportketten zu einer Übergabescheibe des Übergabewagens gelangen, werden sie von der Übergabescheibe an die nächste Transportkette übergeben. Das Transportsystem ist derart ausgestaltet, dass jeweils parallel zueinander angeordnete lineare Transportstrecken aller Transportketten Artikel in entgegen gesetzten Richtungen transportieren. Somit werden die Artikel in dem Transportsystem hin und her transportiert. Durch Verschiebung des Übergabesystems kann zudem die Anzahl der in dem Transportsystem vorhandenen und somit dort gespeicherten Artikel eingestellt werden.

Bei dem in der CA 2 364 216 A1 beschriebenen Transportsystem haben alle U-förmigen Ketten die gleiche Geschwindigkeit. Bei der Übergabe der Behälter von einer Transportkette auf die Übergabescheiben des Übergabewagens sind die Behälter durch Kollisionen einer Beschädigungsgefahr ausgesetzt. Zudem besteht die Gefahr, dass beim Betrieb des Transportsystems oder bei Wartungsarbeiten an dem Transportsystem eine Hand einer Bedienperson zwischen die Transportketten gerät.

Die Firma Nercon Eng. & Mfg., Inc., Oshkosh, Wisconsin, USA, hat in dem U.S. Patent US 5,685,414 ein endloses Transportsystem beschrieben, bei welchem die transportierten Behälter keinem Druck von vorausgehenden Behältern ausgesetzt sind. Zudem hat diese Firma ein weiteres Transportsystem mit dem Namen "Flex Flow Accumulator" entwickelt, bei welchem die transportierten Behälter nur geringem Druck von vorausgehenden Behältern ausgesetzt sind, und welches zudem, ähnlich dem Transportsystem der CA 2 364 216 A1, eine Speicherung von Behältern in dem Transportsystem ermöglicht. Hierbei ist ebenfalls die Anzahl von in dem Transportsystem speicherbaren Behältern variabel einstellbar. Im Unterschied zur CA 2 364 216 A1 kommt jedoch bei dem Flex Flow Accumulator eine durchgehende Kette zum Transport der Behälter zum Einsatz. Auf diese Weise soll sichergestellt werden, dass kein Rückdruck der Produktionslinie existiert.

Bei dem Flex Flow Accumulator der Firma Nercon befinden sich somit die Behälter während des gesamten Transports auf einer Transportkette. Dadurch werden zum einen alle Behälter in dem Flex Flow Accumulator mit einer gleichen Geschwindigkeit transportiert. Zum anderen ist durch diese Konstruktion die Transportkette vergleichsweise groß zu dimensionieren und dadurch schwer. Da solche Ketten mit zunehmenden Dimensionen teurer werden und eine schwere Kette eine größere Antriebskraft benötigt, ist der Flex Flow Accumulator der Firma Nercon sowohl im Hinblick auf die Herstellungskosten als auch die Betriebskosten relativ aufwendig.

Ferner offenbart die europäische Patentanmeldung EP 1 849 725 A1 eine Speichervorrichtung für Behälter gemäß dem Oberbegriff des Anspruchs 1, die wie einleitend beschrieben, mindestens ein Einlaufband und mindestens ein Auslaufband aufweist. Auch sind diese beiden Bänder parallel und in entgegengesetzte Richtungen antreibbar. Zudem weist die Vorrichtung eine Überleiteinheit auf, mittels der die Behälter zwischen den beiden Bändern überleitbar sind. In einer ersten Ausführungs-form dieser Anmeldung ist offenbart, dass die Behälter von dem Einlaufband auf das Auslaufband durch die Überleiteinheit und einer Verschiebeeinheit überleitbar sind, wobei dabei auch mindestens eine weiteres Transferband zwischen dem Ein- und Auslaufband angeordnet ist. Diese Ausführungsform arbeitet nach dem FIFO Prinzip.

Aufgabe der Erfindung ist daher, eine Speichervorrichtung für Behälter zu schaffen, die variabel einsetzbar ist, Beschädigungen der transportierten Behälter vermeidet und die Probleme des Standes der Technik überwindet.

Die Aufgabe wird durch eine Speichervorrichtung für Behälter gelöst, die die Merkmale des Patentanspruchs 1 umfasst.

Eine weitere Aufgabe der Erfindung ist, ein Verfahren zum Speichern von Behältern zu schaffen, bei dem Beschädigungen der Behälter vermieden werden und das die Probleme des Standes der Technik überwindet.

Die obige Aufgabe wird durch ein Verfahren gelöst, das die Merkmale des Patentanspruchs 15 umfasst.

Weitere vorteilhafte Ausgestaltungen der Speichervorrichtung können den abhängigen Patentansprüchen entnommen werden.

Die Erfindung offenbart eine Speichervorrichtung für Behälter gemäß Anspruch 1, wobei die Speichervorrichtung nach dem FIFO-Prinzip arbeitet. Mit anderen Worten bedeutet dies, dass derjenige Behälter, welcher zuerst der Speichervorrichtung zugeführt wird, als erster der Speichervorrichtung wieder entnommen und an eine Behälterbehandlungsvorrichtung übergeben wird. Die Speichervorrichtung umfasst hierzu mindestens ein erstes Transportband, das entlang einer einlaufenden Transportrichtung antreibbar ist. Ferner umfasst die Vorrichtung mindestens ein zweites Transportband, das entlang einer auslaufenden Transportrichtung antreibbar ist. Das mindestens eine Transportband und das mindestens eine zweite Transportband sind parallel zueinander angeordnet und bilden somit ein Speichermodul der Speichervorrichtung. Das Speichermodul selbst besitzt eine Breite und weist an einem ersten Rand ein Einlaufband des Speichermoduls für die Behälter auf. An einem zweiten Rand des Speichermoduls ist ein Auslaufband für die Behälter vorgesehen. Eine Überleiteinheit, die eine innere Führung und eine äußere Führung besitzt, ist derart ausgestaltet, dass die Behälter vom Einlaufband auf das Auslaufband des Speichermoduls überleitbar sind.

Ferner ist eine Verschiebeeinheit vorgesehen, mittels der die Überleiteinheit je nach erforderlicher Speicherkapazität in der Speichervorrichtung parallel entlang des Einlaufbandes bzw. des Auslaufbandes verschiebbar ist. Zwischen dem Einlaufband und dem Auslaufband des Speichermoduls sind mindestens zwei weitere Transportbänder vorgesehen. Diese mindestens zwei weiteren Transportbänder bilden somit eine geschlossene Oberfläche des Speichermoduls.

Die geschlossene Oberfläche innerhalb des Speichermoduls ist von erheblichem Vorteil, da Behälter, welche auf dem Einlaufband bzw. auf dem Auslaufband transportiert werden und aus irgendwelchen Gründen umfallen, somit innerhalb des Speichermoduls verbleiben. Die umgefallenen Behälter können folglich von einer Bedienperson aussortiert werden. Da diese Behälter nicht zerstört sind, können sie weiterhin im Behälterbehandlungsprozess verwendet werden.

Gemäß einer vorteilhaften Ausgestaltung der Erfindung besitzt die Speichervorrichtung mindestens zwei Speichermodule, die parallel zueinander in einer Ebene angeordnet sind. Zwischen den einzelnen Speichermodulen ist jeweils eine Transfereinrichtung vorgesehen, so dass die Behälter vom Auslaufband eines anfänglichen Speichermoduls auf ein Einlaufband eines nachfolgenden Speichermoduls überführbar sind. Ferner besitzen die Speichermodule eine Verschiebeeinheit, mittels der die Überleiteinheiten eines jeden Speichermoduls je nach erforderlicher Speicherkapazität in der Speichervorrichtung entlang der mindestens zwei Speichermodule parallel verschoben werden können.

Die mindestens zwei Speichermodule sind in der Speichervorrichtung mit einem Abstand parallel zueinander angeordnet. Der Abstand zwischen den Speichermodulen ist erforderlich, damit die Transfereinrichtung zwischen den aufeinander folgenden Speichermodulen eingesetzt werden kann.

Zwischen zwei benachbarten parallelen Speichermodulen ist ferner eine Abdeckung eingesetzt. Diese Abdeckung führt dazu, dass auch zwischen den einzelnen Speichermodulen eine geschlossene Oberfläche bzw. eine Ebene hergestellt wird, durch die keine evtl. umfallenden Behälter zerstört werden. Gemäß einer besonders vorteilhaften Ausführungsform ist dabei im Abstand zwischen zwei parallelen Speichermodulen anstelle der Abdeckung mindestens ein Band eingesetzt, dass entlang einer einlaufenden Richtung angetrieben werden kann. Mittels dieses Austragbandes können somit die umgefallenen Behälter an das Ende der Speichervorrichtung transportiert werden. Dort können die Behälter von einer Bedienperson aufgesammelt werden und dem weiteren Behälterbehandlungsprozess zugeführt werden.

Zwischen zwei benachbarten Speichermodulen kann eine Transfereinrichtung zugeordnet sein, so dass die Behälter vom Auslaufband des anfänglichen Speichermoduls auf ein Einlaufband des nachfolgenden Speichermoduls überführbar sind.

Die erfindungsgemäße Vorrichtung kann derart ausgeführt sein, dass die Speichervorrichtung aus einem Stirnmodul, einem Endmodul und mindestens einem Zwischenmodul aufgebaut ist. Die Länge der Speichervorrichtung kann somit mittels einzelner einsetzbarer Zwischenmodule nach Kundenwunsch gestaltet werden. Die Zwischenmodule besitzen eine standardisierte Modullänge.

Die Speichervorrichtung besitzt in einer besonders vorteilhaften Ausgestaltung drei Speichermodule, die jeweils parallel und mit einem Abstand zueinander angeordnet sind.

Die Speichermodule der Speichervorrichtung können verschiedene Ausgestaltungen aufweisen.

Gemäß einer ersten Ausführungsform besitzt jedes der drei Speichermodule der Speichervorrichtung zwei erste Transportbänder und zwei zweite Transportbänder. Die zwei ersten Transportbänder bestehen aus einem Einlaufband und einem unmittelbar angrenzenden, parallel über die gesamte Länge des Speichermoduls verlaufenden ersten Transferband zusammen. Die zwei zweiten Transportbänder setzen sich ebenso aus einem Auslaufband und einem unmittelbar angrenzenden, parallel über die gesamte Länge des Speichermoduls verlaufenden zweiten Transferband zusammen. Somit sind zwischen dem Einlaufband und dem Auslaufband eines jeden Speichermoduls zwei Transferbänder vorgesehen, die entweder jeweils durch zwei Teilketten oder vorteilhaft durch eine breite Kette gebildet werden. Auch kann bei Bedarf die Breite der Einlauf- und Auslaufbänder vergrößert werden.

Innerhalb der durch die Speichermodule gebildeten Ebene können mindestens zwei Verschiebeeinheiten vorgesehen sein. Die Verschiebeeinheiten können als Endlosband ausgebildet sein, auf dem mindestens eine Überleiteinheit sitzt. Die zwei Endlosbänder können jeweils zwischen dem anfänglichen Speichermodul und der ersten Abdeckung oder Austragsbändern sowie zwischen der zweiten Abdeckung oder Austragsbändern und dem letzten Speichermodul vorgesehen sein. Durch die Nebeneinanderreihung aller Bänder wird über die gesamte Speichervorrichtung eine geschlossene Oberfläche bzw. Ebene gebildet.

Jede der einem Speichermodul zugeordneten Überleiteinheit kann eine äußere Führung und eine innere Führung besitzen. Die äußere Führung und die innere Führung bilden eine Gasse für die Behälter vom Einlaufband zum Auslaufband hin. Jede der Überleiteinheiten ist derart an einem Traggerüst montiert, so dass mindestens mittels einer Stütze die Überleiteinheit auf der Verschiebeeinheit sitzt. Wie bereits erwähnt, ist es möglich, mittels der Verschiebeeinheit die jeweiligen Überleiteinheiten frei und linear über den jeweiligen Speichermodulen zu verschieben.

Zwischen den zwei parallel zueinander angeordneten und aufeinander folgenden Speichermodulen kann die Transfereinrichtung vorgesehen sein. Die Transfereinrichtung besteht aus einer Endloskette mit einer am Stirnmodul angebrachten oberen und unteren Umlenkung. Die obere und untere Umlenkung sind derart in der Speichervorrichtung angeordnet, dass die Endloskette das Auslaufband des anfänglichen Speichermoduls und das Einlaufband des nachfolgenden Speichermoduls bildet.

Die Speichervorrichtung ist mit einer Vielzahl von Antriebseinrichtungen verbunden, mit denen die mehreren in der Speichervorrichtung vorgesehenen Bänder angetrieben werden können. Eine erste Antriebseinrichtung dient zum Antrieb des Einlaufbandes des anfänglichen Speichermoduls. Eine zweite Antriebseinrichtung dient zum Antrieb des auf das Einlaufband des anfänglichen Speichermoduls folgenden ersten Transferbandes. Eine dritte Antriebseinrichtung dient zum Antrieb des zweiten Transferbandes des anfänglichen Speichermoduls. Eine vierte Antriebseinrichtung dient zum Antrieb der dem anfänglichen Speichermodul und dem nachfolgenden Speichermodul gemeinsamen Endloskette, bestehend aus dem Auslaufband des anfänglichen Speichermoduls und dem Einlaufband des nachfolgenden Speichermoduls, sowie des ersten Transferbandes des nachfolgenden Speichermoduls. Ferner kann die vierte Antriebseinrichtung bei dieser Ausführungsform zum Antrieb der zwischen den Speichermodulen vorgesehenen Bänder, anstelle einer Abdeckung, zum Austrag von umgefallenen Behältern in Richtung der ersten Transportrichtung dienen. Eine fünfte Antriebseinrichtung dient zum Antrieb der Verschiebeeinheit. Eine sechste Antriebseinrichtung dient zum Antrieb der auf die dem nachfolgenden Speichermodul und dem letzten Speichermodul gemeinsamen Endloskette, bestehend aus dem Auslaufband des nachfolgenden Speichermoduls und dem Einlaufband des letzten Speichermoduls, sowie des ersten Transferbandes des letzten Speichermoduls. Eine siebente Antreibseinrichtung dient zum Antrieb des zweiten Transferbandes des nachfolgenden Speichermoduls. Eine achte Antriebseinrichtung dient zum Antrieb des zweiten Transferbandes des letzten Speichermoduls. Das Auslaufband des letzten Speichermoduls wird schließlich ebenso von einem separaten Antrieb angetrieben. Vorteilhaft können das Auslaufband und das zweite Transferband des letzten Speichermoduls von einem gemeinsamen Antrieb angetrieben werden. Es ist für einen Fachmann selbstverständlich, dass die Anordnung und Anzahl der Antriebseinrichtungen von der Anzahl der anzutreibenden Transportbänder, Verschiebeeinheiten und der übrigen Bänder abhängt.

Gemäß einer weiteren Ausführungsform der Speichermodule der Speichervorrichtung besitzt jedes Speichermodul zwei erste Transportbänder und ein zweites Transportband. Somit ist zwischen dem Einlaufband und dem Auslaufband eines jeden Speichermoduls ein erstes Transferband vorgesehen.

Innerhalb der durch die Speichermodule gebildeten Ebene können mindestens zwei Verschiebeeinheiten vorgesehen sein, die jeweils als Endlosband ausgebildet sind und worauf die mindestens eine Überleiteinheit sitzt. Die zwei Endlosbänder sind dabei jeweils zwischen dem anfänglichen Speichermodul und der ersten Abdeckung oder den Austragsbändern sowie zwischen der zweiten Abdeckung oder Austragsbändern und dem letzten Speichermodul vorgesehen. Durch die Nebeneinanderreihung aller, parallel verlaufenden Bänder, wird über die gesamte Speichervorrichtung eine geschlossene Oberfläche bzw. Ebene gebildet.

Jede der einem Speichermodul zugeordneten Überleiteinheit kann eine äußere Führung und eine innere Führung besitzen. Die äußere Führung und die innere Führung bilden zusammen eine Gasse für Behälter vom Einlaufband zum Auslaufband des jeweiligen Speichermoduls. Jede der Überleiteinheiten ist derart an einem Traggerüst montiert, so dass diese mindestens mittels einer Stütze auf der Verschiebeeinheit sitzt. Somit können die jeweiligen Überleiteinheiten frei und linear über den jeweiligen Speichermodulen verschoben werden. Die jeweilige äußere Führung und die jeweilige innere Führung der Überleiteinheiten sind im Bereich der den Einlaufbändern der Speichermodule benachbarten ersten Transferbänder derart ausgeformt, dass die Gasse schräg über die ersten Transferbänder verläuft. Somit können die Behälter unmittelbar auf das Auslaufband übergeführt werden.

Wie bereits zu den vorher beschriebenen Ausführungsbeispielen dargestellt, ist auch hier zwischen zwei parallel zueinander angeordneten und aufeinander folgenden Speichermodulen die Transfereinrichtung vorgesehen. Die Transfereinrichtung besteht aus einer Endloskette mit einer am Stirnmodul angebrachten oberen Umlenkung und einer unteren Umlenkung. Die obere Umlenkung und die untere Umlenkung sind dabei derart in der Speichervorrichtung angeordnet, dass die Endloskette das Auslaufband des anfänglichen Speichermoduls und das Einlaufband eines nachfolgenden Speichermoduls bildet.

Auch hier sind verschiedene Antriebseinrichtungen der Speichervorrichtung zugeordnet, um somit die einzelnen Bänder der einzelnen Speichermodule entsprechend antreiben zu können. Eine erste Antriebseinrichtung dient zum Antrieb des Einlaufbandes des anfänglichen Speichermoduls. Eine zweite Antriebseinrichtung dient zum Antrieb des auf das Einlaufband des anfänglichen Speichermoduls folgenden ersten Transferbandes. Eine dritte Antriebseinrichtung dient zum Antrieb der dem anfänglichen Speichermodul und dem nachfolgenden Speichermodul gemeinsamen Endloskette, bestehend aus dem Auslaufband des anfänglichen Speichermoduls und dem Einlaufband des nachfolgenden Speichermoduls, sowie des ersten Transferbandes des nachfolgenden Speichermoduls. Ferner dient die dritte Antriebseinrichtung bei dieser Ausführungsform zum Antrieb der zwischen den Speichermodulen vorgesehenen Austragsbändern anstelle einer Abdeckung. Eine vierte Antriebseinrichtung dient zum Antrieb der dem nachfolgenden Speichermodul und dem letzten Speichermodul gemeinsamen Endloskette, bestehend aus dem Auslaufband des nachfolgenden Speichermoduls und dem Einlaufband des letzten Speichermoduls, sowie des Transferbandes des letzten Speichermoduls. Eine fünfte Antriebseinrichtung dient zum Antrieb der Verschiebeeinheit.

Gemäß einer weiteren Ausführungsform eines Speichermoduls für eine Speichervorrichtung besitzt das Speichermodul ein erstes Transportband, das ein Einlaufband ist, und ein zweites Transportband, das ein Auslaufband ist. Zwischen dem Einlaufband und dem Auslaufband eines jeden Speichermoduls sind ein erstes Transferband und ein zweites Transferband vorgesehen. Das zwischen dem Einlaufband und dem Auslaufband eines jeden Speichermoduls vorgesehene erste und zweite Transferband können aus einer endlosen Überleitkette gebildet sein.

Innerhalb der durch die Speichermodule gebildeten Ebenen kann mindestens eine Verschiebeeinheit vorgesehen sein, die jeweils als ein Schlitten ausgebildet ist und auf denen die mindestens eine Überleiteinheit sitzt. An dem Schlitten ist beidseitig jeweils in Richtung der beiden Transportrichtungen ein Jalousieband befestigt, das einerseits die Funktion der Positionierung der Verschiebeeinheit und andererseits die geschlossene Ebene gewährleistet. Außerdem dient dieses Jalousieband zusätzlich zur Behälteraustragung und ganz besonders zu einer seitlichen Führung der benachbarten Transferbänder. Das Jalousieband kann jeweils mittig in den einzelnen Speichermodulen angeordnet sein und ist schleifenförmig ausgebildet.

Zwischen dem Einlaufband und dem Auslaufband eines jeden Speichermoduls ist eine Überleiteinheit vorgesehen. Die Überleiteinheit besitzt eine äußere Führung und/oder eine innere Führung, die zusammen eine Gasse für die Behälter vom Einlaufband zum Auslaufband hin bilden. Zudem umfasst jede Transfereinrichtung die endlose Überleitkette, die an der Transfereinrichtung mittels einer ersten Umlenkscheibe von einer ersten Transportrichtung des Einlaufbandes in eine zweite Transportrichtung des Auslaufbandes umlenkbar ist. In einer zweiten Umlenkscheibe ist die endlose Überleitkette von einer zweiten Transportrichtung des Auslaufbandes in eine erste Transportrichtung des Einlaufbandes umlenkbar.

Die äußere Führung und/oder die innere Führung der Überleiteinheit können derart angeordnet sein, dass die Behälter vom Einlaufband über die endlose Überleitkette auf das Auslaufband leitbar sind.

Zwischen den parallel zueinander angeordneten und aufeinander folgenden Speichermodulen ist die Transfereinrichtung vorgesehen. Die Transfereinrichtung besteht ebenfalls aus einer Endloskette mit einer am Stirnmodul angebrachten oberen und unteren Umlenkung. Die obere und untere Umlenkung sind dabei derart in der Speichervorrichtung angeordnet, dass beispielsweise das Auslaufband des anfänglichen Speichermoduls und das Einlaufband des nachfolgenden Speichermoduls die Endloskette bildet.

Für den Antrieb der in dieser Ausführungsform des Speichermoduls bzw. in der Ausführungsform der Speichervorrichtung vorgesehenen Transportbänder ist ebenfalls eine Vielzahl von Antriebseinrichtungen vorgesehen. Eine erste Antriebseinrichtung dient zum Antrieb des Einlaufbandes des anfänglichen Speichermoduls. Eine zweite Antriebseinrichtung dient zum Antrieb der auf das Einlaufband des anfänglichen Speichermoduls folgenden endlosen Überleitkette in der ersten Transportrichtung, bedingt durch die Einbaulage am Endmodul. Vorteilhaft wäre es auch möglich den Antrieb in das Stirnmodul zu interieren. Dabei muss dann der Antrieb in die zweite Transportrichtung und die Zugkraft auf die dem Auslaufband vorangehende, endlose Überleitkette erfolgen. Eine dritte Antriebseinrichtung dient zum Antrieb der dem anfänglichen Speichermoduls und dem nachfolgenden Speichermoduls gemeinsamen Endloskette, bestehend aus dem Auslaufband des anfänglichen Speichermoduls und dem Einlaufband des nachfolgenden Speichermoduls. Eine vierte Antriebseinrichtung dient zum Antrieb der dem nachfolgenden Speichermodul und dem letzten Speichermoduls gemeinsamen Endloskette, bestehend aus dem Auslaufband des nachfolgenden Speichermodul und dem Einlaufband des letzten. Eine fünfte Antriebseinrichtung dient zum Antrieb der Verschiebeeinheit. Eine sechste Antriebseinrichtung dient zum Antrieb auf die dem Auslaufband des nachfolgenden Speichermoduls vorangehende, endlose Überleitkette in eine zweite Transportrichtung. Eine siebte Antriebseinrichtung dient zum Antrieb auf die dem Auslaufband des letzten Speichermoduls vorangehende, endlose Überleitkette in eine zweite Transportrichtung.

Die dritte Antriebseinrichtung kann ebenfalls zum Antrieb von mindestens einem Band dienen, das zwischen dem anfänglichen Speichermodul und dem nachfolgenden Speichermodul sowie zwischen dem nachfolgenden Speichermodul und dem letzten Speichermodul vorgesehen ist. Vorteilhaft kann die Last auch verteilt werden auf zwei Antriebe. Dabei wirkt dann der dritte Antrieb auf das Austragsband, das zwischen dem anfänglichen Speichermodul und dem nachfolgenden Speichermodul liegt und der vierte Antrieb wirkt auf das Austragsband, das zwischen dem nachfolgenden und dem letzten Speichermodul vorgesehen ist.

Gemäß einer weiteren Ausgestaltung der Erfindung ist ein Speichermodul in Form einer vertikalen Helix geformt und an einem Träger angebracht. Dies hat den Vorteil, dass mit der in dieser Ausführungsform beschriebenen Speichervorrichtung der für die Aufstellung erforderliche Platz eingespart werden kann. Die Speicherung der Behälter erfolgt somit im Gegensatz zu den vorher beschriebenen Ausführungsformen in vertikaler Richtung. Das Speichermodul besteht aus einem Stirnmodul, einem Endmodul und mindestens einem Zwischenmodul. Die Länge des Speichermoduls kann mittels einzelner und entsprechend in Form der Helix gebogener Zwischenmodule mit jeweils konstanter Modullänge gebildet werden. Die Länge des Speichermoduls hängt im Wesentlichen vom Wunsch des Kunden ab.

Das Speichermodul kann zwei erste Transportbänder und zwei zweite Transportbänder umfassen, so dass zwischen dem Einlaufband und dem Auslaufband eines jeden Speichermoduls ein erstes Transferband und ein zweites Transferband vorgesehen sind. Das Speichermodul kann eine Verschiebeeinheit besitzen, auf der die Überleiteinheit sitzt.

Gemäß einer weiteren Ausführungsform besitzt das helixförmige Speichermodul zwei erste Transportbänder und ein zweites Transportband. Somit ist zwischen dem Einlaufband und dem Auslaufband eines jeden Speichermoduls ein erstes Transferband vorgesehen.

Gemäß einer weiteren Ausführungsform ist das helixförmige Speichermodul mit einem ersten Transportband, das ein Einlaufband ist, und mit einem zweiten Transportband, das ein Auslaufband ist, ausgebildet. Zwischen dem Einlaufband und dem Auslaufband eines jeden Speichermoduls sind ein erstes Transferband und ein zweites Transferband vorgesehen. Das zwischen dem Einlaufband und dem Auslaufband des Speichermoduls vorgesehene erste Transferband und zweite Transferband sind als eine endlose Überleitkette ausgebildet.

Die Verschiebeeinheit kann die endlose Überleitkette umfassen, die an der Verschiebeeinheit mittels einer ersten Umlenkscheibe von der ersten Transportrichtung des Einlaufbandes in eine zweite Transportrichtung des Auslaufbandes umlenkbar ist. Mittels einer zweiten Umlenkscheibe kann die Überleitkette von einer zweiten Transportrichtung des Auslaufbandes in eine erste Transportrichtung des Einlaufbandes umgelenkt werden.

Die äußere Führung und die innere Führung der Überleiteinheit können derart angeordnet sein, dass die Behälter vom Einlaufband über die endlose Überleitkette auf das Auslaufband geleitet werden.

Ebenso ist ein Verfahren zum Speichern von Behältern nach dem FIFO-Prinzip mittels einer Speichervorrichtung gemäß Anspruch 1 beschrieben. Hierzu können von einer ersten Behälterbehandlungseinrichtung einer Behälterbehandlungsanlage die Behälter einem Einlaufband einer Speichervorrichtung zugeführt werden. Mittels einer Überleiteinheit, die eine innere Führung und eine äußere Führung besitzt, werden die Behälter vom Einlaufband auf ein Auslaufband der Speichervorrichtung übergeleitet. Die Behälter werden beim Überleiten vom Einlaufband auf das Auslaufband über mindestens zwei weitere antreibbare Transportbänder geführt. Die erforderliche Speicherkapazität bei dem erfindungsgemäßen Verfahren wird dadurch eingestellt, dass eine Steuerungs- und Regeleinheit der Behälterbehandlungsanlage die für die Speicherung erforderliche Kapazität ermittelt. Anhand der ermittelten erforderlichen Speicherkapazität wird dann die Verschiebeeinheit zusammen mit der Überleiteinheit entlang des Einlaufbandes bzw. des Auslaufbandes verschoben.

Um für die in der Speichervorrichtung zwischengespeicherten Behälter in einer geschlossenen Oberfläche umlenken zu können, werden zum eigentlichen Einlaufband bzw. zum Auslaufband begleitend mehrere Transportbänder mitgezogen. Diese Transportbänder sind größtenteils ohne Beladung und somit kaum Zugkräften ausgesetzt. Diese Transportbänder laufen somit einfach mit dem Einlaufband bzw. Auslaufband mit und bilden eine Sicherheit und einen Schutz, damit keine in der Speichervorrichtung bzw. im Speichermodul vorhandenen Behälter auf den Boden fallen und somit zerstört werden.

Die Richtungsänderungen des Auslaufbandes eines anfänglichen Speichermoduls hin zum Einlaufband eines nachkommenden Speichermoduls geschehen durch eine innen liegende Scheibe. Diese innen liegende Scheibe des beladenen Auslaufbandes bzw. Einlaufbandes nimmt die Zugkräfte auf und lenkt den Kraftantriebspunkt um. Dadurch kommt es zu keiner Bandumschlingung des beladenen Einlaufbandes bzw. Auslaufbandes. Die mitgeführten weiteren Transportbänder können, wie allgemein üblich, durch ein Umlenkrad umgelenkt werden.

Wie bereits in den Ausführungen zu den Ausführungsbeispielen beschrieben, wird die Verschiebeeinheit und somit auch die Überleiteinheit durch mindestens ein in der Ebene der Speichervorrichtung angeordnetes Jalousieband positioniert und ermöglicht somit eine offene Bauweise ohne zusätzliche Überbauten der Speichervorrichtung. Die Führung der Verschiebeeinheit kann ebenfalls durch seitliche Führungen (beispielsweise Schienen) ermöglicht werden.

Nachfolgend wird die Erfindung anhand von Ausführungsbeispielen unter Bezugnahme auf die beigefügten Zeichnungen näher beschrieben.
Fig. 1 zeigt eine schematische Ansicht einer Behälterbehandlungsanlage, bei der die erfindungsgemäße Speichervorrichtung verwendet ist.
Fig. 2 zeigt eine Draufsicht auf eine erste Ausführungsform der erfindungsgemäßen Speichervorrichtung, wobei der Einlauf in die Speichervorrichtung und der Auslauf aus der Speichervorrichtung mit dargestellt sind.
Fig. 3 zeigt eine Draufsicht auf eine erste Ausführungsform der Speichervorrichtung, wobei die Speichervorrichtung aus drei Speichermodulen gebildet ist, die parallel zueinander angeordnet sind und eine geschlossene Oberfläche bilden.
Fig. 4 zeigt eine zweite Ausführungsform der erfindungsgemäßen Speichervorrichtung, wobei drei Speichermodule parallel zueinander angeordnet sind und eine geschlossene, horizontale Oberfläche bilden.
Fig. 5 zeigt eine Draufsicht einer dritten Ausführungsform der erfindungsgemäßen Speichervorrichtung, wobei drei Speichermodule parallel zueinander angeordnet sind und eine geschlossene Oberfläche bilden.
Fig. 5A zeigt eine Draufsicht einer weiteren Ausgestaltung der bevorzugten dritten Ausführungsform der erfindungsgemäßen Speichervorrichtung, wobei drei Speichermodule parallel zueinander angeordnet sind und eine geschlossene Oberfläche bilden.
Fig. 6 zeigt eine Draufsicht einer ersten Ausführungsform eines Speichermoduls für die Speichervorrichtung.
Fig. 7 zeigt eine Draufsicht einer zweiten Ausführungsform des Speichermoduls für die Speichervorrichtung.
Fig. 8 zeigt eine Draufsicht einer dritten Ausführungsform des Speichermoduls für die Speichervorrichtung.
Fig. 9 zeigt eine Draufsicht einer ersten Ausführungsform der erfindungsgemäßen Speichervorrichtung, wobei die maximale Speicherkapazität für die Behälter eingestellt ist.
Fig. 10 zeigt eine Draufsicht einer ersten Ausführungsform des Stirnmoduls der erfindungsgemäßen Speichervorrichtung, wobei zur besseren Übersicht die auf der Speichervorrichtung aufliegenden Transportbänder weggelassen sind.
Fig. 11 zeigt eine Ansicht entlang der in Fig. 10 gezeigten Schnittlinie A-A des Stirnmoduls der erfindungsgemäßen Speichervorrichtung.
Fig. 12 zeigt eine Ansicht entlang der in Fig. 10 gezeigten Schnittlinie B-B der Transfereinrichtung, welche im Stirnmodul der Speichervorrichtung vorgesehen ist.
Fig. 13 zeigt eine Draufsicht einer ersten Ausführungsform des Endmoduls der erfindungsgemäßen Speichervorrichtung, wobei hier ebenfalls die einzelnen Transportbänder aus Gründen der besseren Übersichtlichkeit weggelassen sind.
Fig. 14 zeigt eine Schnittansicht entlang der in Fig. 13 dargestellten Linie A-A.
Fig. 15 zeigt eine Schnittansicht entlang der in Fig. 13 dargestellten Schnittlinie B-B.
Fig. 16 zeigt eine Draufsicht einer ersten Ausführungsform eines Zwischenmoduls, welches bei der erfindungsgemäßen Speichervorrichtung zwischen dem Stirnmodul und dem Endmodul angeordnet ist.
Fig. 17 zeigt eine Ansicht entlang der in Fig. 16 gekennzeichneten Schnittlinie A-A, wobei hier ein Rahmenelement in Transportrichtung des Zwischenmoduls dargestellt ist.
Fig. 18 zeigt eine Schnittansicht entlang der in Fig. 16 gekennzeichneten Schnittlinie C-C.
Fig. 19 zeigt eine Schnittansicht entlang der in Fig. 16 gekennzeichneten Linie B-B.
Fig. 20 zeigt eine vergrößerte Darstellung des in Fig. 19 mit dem Kreis K19 gekennzeichneten Bereichs.
Fig. 21 zeigt eine perspektivische Ansicht der ersten Ausführungsform des Zwischenmoduls der erfindungsgemäßen Speichervorrichtung.
Fig. 22 zeigt eine vergrößerte Darstellung des in Fig. 21 mit K21 gekennzeichneten Bereichs.
Fig. 23 zeigt eine Draufsicht eines Zwischenmoduls der ersten Ausführungsform der erfindungsgemäßen Speichervorrichtung, wobei dieses Zwischenmodul keinen Antrieb für die Verschiebeeinheit enthält.
Fig. 24 zeigt eine Ansicht des in Fig. 23 dargestellten Zwischenmoduls aus der mit X bezeichneten Blickrichtung.
Fig. 25 zeigt eine perspektivische Ansicht eines Zwischenmoduls der ersten Ausführungsform ohne zusätzlichen Antrieb.
Fig. 26 zeigt eine Ansicht entlang der in Fig. 23 mit A-A bezeichneten Schnittlinie.
Fig. 27 zeigt eine vergrößerte Darstellung des in Fig. 25 mit dem Kreis K25 gekennzeichneten Bereichs.
Fig. 28 zeigt eine vergrößerte Darstellung des aus Fig. 26 mit K26 gekennzeichneten Bereichs.
Fig. 29 zeigt eine Schnittdarstellung der dritten Ausführungsform durch die erfindungsgemäße Speichervorrichtung quer zur Transportrichtung, wobei die Speichervorrichtung aus drei Speichermodulen aufgebaut ist.
Fig. 30 zeigt eine vergrößerte Darstellung des in Fig. 29 mit K29 gekennzeichneten Bereichs.
Fig. 31 zeigt eine Schnittdarstellung quer zur Transportrichtung einer dritten Ausführungsform der erfindungsgemäßen Speichervorrichtung, wobei die Speichervorrichtung ebenfalls aus drei Speichermodulen aufgebaut ist.
Fig. 32 zeigt eine vergrößerte Darstellung des in Fig. 31 mit K31 gekennzeichneten Bereichs.
Fig. 32A zeigt eine vergrößerte Schnittdarstellung durch die Verschiebeeinheit des in Fig. 31 mit K31 gekennzeichneten Bereichs.
Fig. 33 zeigt eine perspektivische Ansicht der Anordnung von drei Überleiteinheiten einer ersten Ausführungsform, wobei jede einem Speichermodul zugeordnet ist.
Fig. 34 zeigt eine Draufsicht auf die Anordnung der drei Überleiteinheiten einer ersten Ausführungsform, die an einem gemeinsamen Gestell angebracht sind.
Fig. 35 zeigt eine Ansicht der Überleiteinheiten in Transportrichtung.
Fig. 36 zeigt eine Schnittansicht entlang der in Fig. 34 mit A-A gekennzeichneten Schnittlinie.
Fig. 37 zeigt eine perspektivische Ansicht einer weiteren Ausführungsform der erfindungsgemäßen Speichervorrichtung, wobei mindestens ein Speichermodul als Helix geformt ist.

In den Figuren entsprechen die Größenverhältnisse von einzelnen Elementen zueinander nicht immer den realen Größenverhältnissen, da einige Formen vereinfacht und andere Formen zur besseren Veranschaulichung vergrößert im Verhältnis zu anderen Elementen dargestellt sind.

Für gleiche oder gleich wirkende Elemente der Erfindung sind identische Bezugszeichen verwendet. Ferner sind der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die erfindungsgemäße Vorrichtung ausgestaltet sein kann und stellen keine abschließende Begrenzung dar.

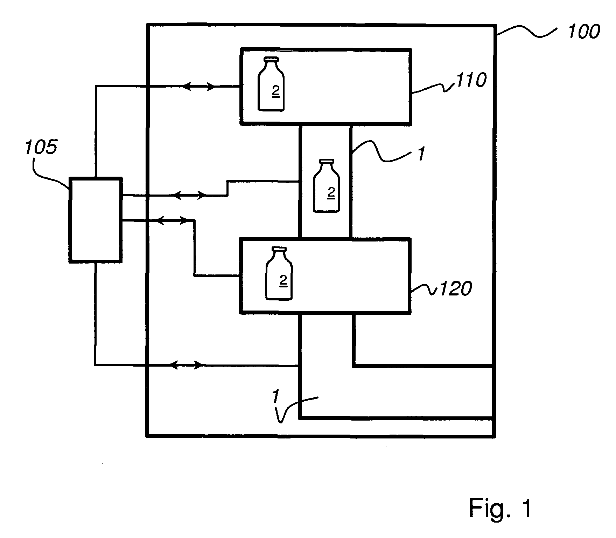

**Fig. 1** zeigt schematisch und stark vereinfacht eine Behälterbehandlungsanlage 100 zur Behandlung von Behältern 2, wie beispielsweise Kunststoffflaschen, Glasflaschen, Metalldosen, usw. Die Behälterbehandlungsanlage 100 besteht in der hier dargestellten Ausführungsform aus einer ersten Behälterbehandlungseinrichtung 110 und einer zweiten Behälterbehandlungseinrichtung 120. Zwischen der ersten Behälterbehandlungseinrichtung 110 und der zweiten Behälterbehandlungseinrichtung 120 ist eine erfindungsgemäße Speichervorrichtung 1 angeordnet. Ebenso ist der zweiten Behälterbehandlungseinrichtung 120 eine weitere Speichervorrichtung 1 nachgeordnet. Es ist für einen Fachmann selbstverständlich, dass die Behälterbehandlungsanlage 100 auch mehrere als die hier dargestellten Behälterbehandlungseinrichtungen 110, 120 und ebenso mehr Speichervorrichtungen 1 umfassen kann.

Die erste Behälterbehandlungseinrichtung 110 kann beispielsweise eine Etikettiereinrichtung zum Etikettieren von Behältern 2 mit einem Etikett sein. Die zweite Behälterbehandlungseinrichtung 120 ist beispielsweise ein Füller zum Füllen der Behälter 2 mit einer Flüssigkeit (hier nicht dargestellt). Die Behälterbehandlungseinrichtungen 110, 120 können aber auch eine Streck-Blasmaschine zur Herstellung von fertigen Kunststoffbehältern 2, wie beispielsweise Getränkeflaschen aus Vorformlingen, eine Reinigungseinrichtung zur Reinigung der Behälter 2, eine Verpackungseinrichtung zum Verpacken der Behälter 2, usw., sein. Die Speichervorrichtungen 1 dienen zum Speichern als auch zum Transport der Behälter 2 von den einzelnen Behälterbehandlungseinrichtungen 110 zu nach geschalteten Behälterbehandlungseinrichtungen 120 bzw. zu weiteren (hier nicht dargestellten) Weiterverarbeitungseinrichtungen. Eine Steuer- und Regeleinheit 105 ist mit den Elementen der Behälterbehandlungsanlage 100 verbunden. Anhand der Signale, welche die Steuer- und Regeleinheit 105 misst, werden die Speichervorrichtungen 1 entsprechend gesteuert, um die Kapazität der einzelnen Speichervorrichtungen 1 in Abhängigkeit von den Messsignalen der Steuer- und Regeleinheit 105 zu verändern.

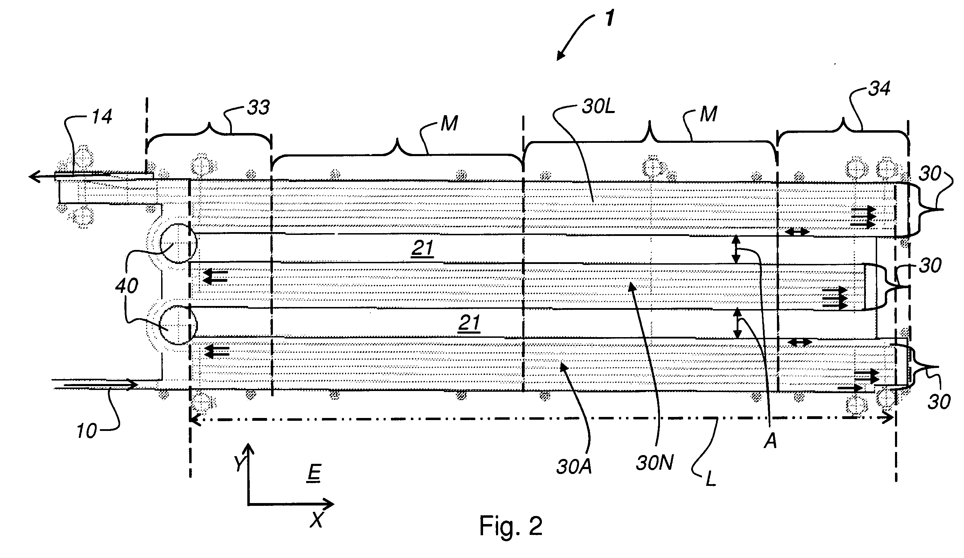

**Fig. 2** zeigt eine Draufsicht auf eine schematische Darstellung der erfindungsgemäßen Speichervorrichtung 1, die aus drei Speichermodulen 30 aufgebaut ist. Die Speichermodule 30 der Speichervorrichtung 1 sind parallel zueinander angeordnet und befinden sich in einer Ebene E, welche in **Fig. 2** durch die in X-Koordinatenrichtung und Y-Koordinatenrichtung aufgespannte Ebene repräsentiert ist. Die erfindungsgemäße Speichervorrichtung 1 besteht aus einem Stirnmodul 33 und einem Endmodul 34. Zwischen dem Stirnmodul 33 und dem Endmodul 34 ist mindestens ein weiteres Zwischenmodul M eingesetzt. In der kleinsten Ausbaustufe besteht die erfindungsgemäße Speichervorrichtung 1 aus einem Stirnmodul 33, einem Zwischenmodul M und einem Endmodul 34. Das zwischen dem Stirnmodul 33 und dem Endmodul 34 angeordnete Zwischenmodul M ist dabei, falls nur ein einziges Zwischenmodul M vorgesehen ist, mit einer Antriebseinrichtung versehen. Die Behälter (hier nicht dargestellt) gelangen über einen Einlauf 10 in die Speichervorrichtung 1. Über einen Auslauf 14 verlassen die Behälter die Speichervorrichtung 1. Die einzelnen Speichermodule 30 sind mit einem Abstand A untereinander beabstandet. Das Stirnmodul 33 trägt ferner eine Transfereinrichtung 40, mit der es möglich ist, die in der Speichervorrichtung 1 gespeicherten Behälter 2 von einem anfänglichen Speichermodul 30A auf ein nachfolgendes Speichermodul 30N überzuführen. Zwischen den einzelnen Speichermodulen ist in diesen Fall eine Abdeckung 21 vorgesehen, damit eine geschlossene Oberfläche oder Ebene hergestellt wird. Es ist für einen Fachmann selbstverständlich, dass die in **Fig. 2** dargestellte Ausführungsform auch aus mehr als drei und auch weniger als drei Speichermodulen 30 bestehen kann.

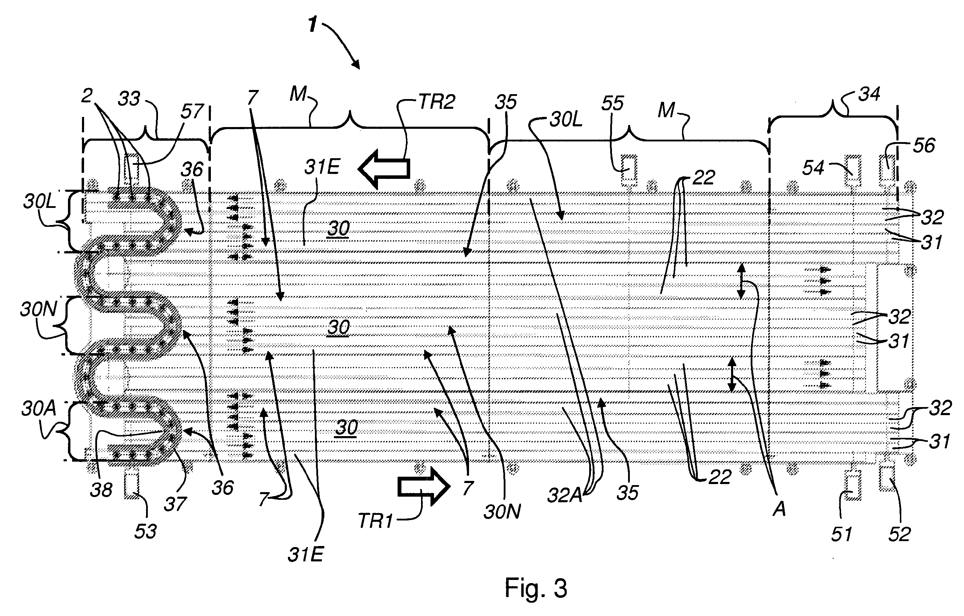

**Fig. 3** zeigt eine Draufsicht auf die erfindungsgemäße Speichervorrichtung 1, die in der hier dargestellten ersten Ausführungsform ebenfalls aus drei parallel zueinander angeordneten Speichermodulen 30 aufgebaut ist. Die Speichermodule 30 sind ebenfalls mit einem Abstand A zueinander beabstandet. Die erfindungsgemäße Speichervorrichtung 1 besteht somit aus einem anfänglichem Speichermodul 30A, aus einem nachfolgenden Speichermodul 30N und einem letzten Speichermodul 30L. Jedem Speichermodul 30 ist eine Überleiteinheit 36 zugeordnet. Mittels der Überleiteinheit 36 können die Behälter 2 von einem Einlaufband 31 E eines Speichermoduls 30 über die beiden Transferbänder 31 und 32 auf ein Auslaufband 32A desselben Speichermoduls 30 übergeleitet werden. Jede Überleiteinheit 36 besteht aus einer äußeren Führung 37 und einer inneren Führung 38. Die äußere Führung 37 und die innere Führung 38 dienen dazu, die Behälter 2 sicher vom Einlaufband 31 E auf das Auslaufband 32A des Speichermoduls 30 überzuführen. Das Einlaufband 31 E und das mindestens eine Transferband 31 eines jeden Speichermoduls 30 werden in der ersten Transportrichtung TR1 angetrieben. Das Auslaufband 32A und das mindestens eine Transferband 32 eines jeden Speichermoduls werden in der zweiten Transportrichtung TR2 angetrieben.

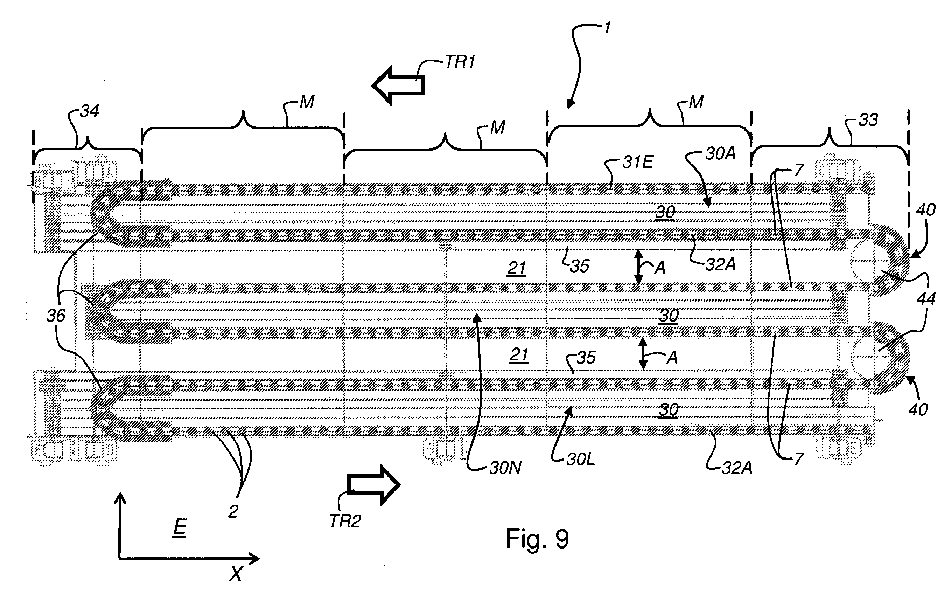

In den Abständen A zwischen den Speichermodulen 30 kann eine Abdeckung 21 (siehe bspw. **Fig. 9**) eingesetzt sein, um somit eine einheitliche Ebene E der Speichervorrichtung 1 zu gewährleisten. Bei der in **Fig. 3** gezeigten Ausführungsform sind in dem Abstand A zwischen zwei aufeinander folgenden Speichermodulen 30 drei Bänder 22 eingesetzt. Die Bänder 22 können in Richtung der ersten Transportrichtung TR1 angetrieben werden. Somit ist es möglich, Behälter 2, die evtl. von einem Speichermodul 30 umfallen, mittels der Bänder 22 zum Endmodul 34 der Speichervorrichtung 1 zu transportieren. Am Endmodul 34 können die so antransportierten Behälter 2 leicht von einer Bedienperson entnommen werden und ggf. wieder dem Verarbeitungs- bzw. Behandlungsprozess der Behälter 2 zugeführt werden.

Für den Antrieb der Vielzahl der in der Speichervorrichtung 1 vorhandenen ersten und zweiten Transferbänder 31, 32, Einlaufbänder 31 E, Auslaufbänder 32A, Verschiebeeinheiten 35 und der Bänder 22 sind mehrere Antriebseinrichtungen 51, 52, 53, 54, 55, 56 und 57 vorgesehen. Eine erste Antriebseinrichtung 51 dient zum Antrieb des Einlaufbandes 31 E des anfänglichen Speichermoduls 30A. Eine zweite Antriebseinrichtung 52 dient zum Antrieb des auf das Einlaufband 31 E des anfänglichen Speichermoduls 30A folgenden ersten Transferbandes 31. Eine dritte Antriebseinrichtung 53 dient zum Antrieb des zweiten Transferbandes 32 des anfänglichen Speichermoduls 30A. Eine vierte Antriebseinrichtung 54 dient zum Antrieb der dem anfänglichen Speichermodul 30A und dem nachfolgenden Speichermodul 30N gemeinsamen Endloskette 7, bestehend aus dem Auslaufband 32A des anfänglichen Speichermoduls 30A und dem Einlaufband 32E des nachfolgenden Speichermoduls 30N, sowie des ersten Transferbandes 31 des nachfolgenden Speichermoduls 30N. Ferner kann die vierte Antriebseinrichtung bei dieser Ausführungsform zum Antrieb der zwischen den Speichermodulen vorgesehenen Bänder 22, anstelle einer Abdeckung, zum Austrag von umgefallenen Behältern 2 in Richtung TR1 der ersten Transportrichtung dienen. Eine fünfte Antriebseinrichtung 55 dient zum Antrieb der Verschiebeeinheit 35. Eine sechste Antriebseinrichtung 56 dient zum Antrieb der auf die dem nachfolgenden Speichermodul 30N und dem letzten Speichermodul 30L gemeinsamen Endloskette 7, bestehend aus dem Auslaufband 32A des nachfolgenden Speichermoduls 30N und dem Einlaufband 31 E des letzten Speichermoduls 30L, sowie des ersten Transferbandes31 des letzten Speichermoduls 30L. Eine siebente Antriebseinrichtung 57 dient zum Antrieb des zweiten Transferbandes 32 des nachfolgenden Speichermoduls 30N. Eine achte Antriebseinrichtung (nicht gezeigt) dient zum Antrieb des zweiten Transferbandes 32 des letzten Speichermoduls 30L. Das Auslaufband 32A des letzten Speichermoduls 30L wird schließlich ebenso von einem separaten Antrieb (nicht gezeigt) angetrieben. Vorteilhaft können das Auslaufband 32A und das zweite Transferband 32 des letzten Speichermoduls 30L von einem gemeinsamen Antrieb (nicht gezeigt) angetrieben werden.

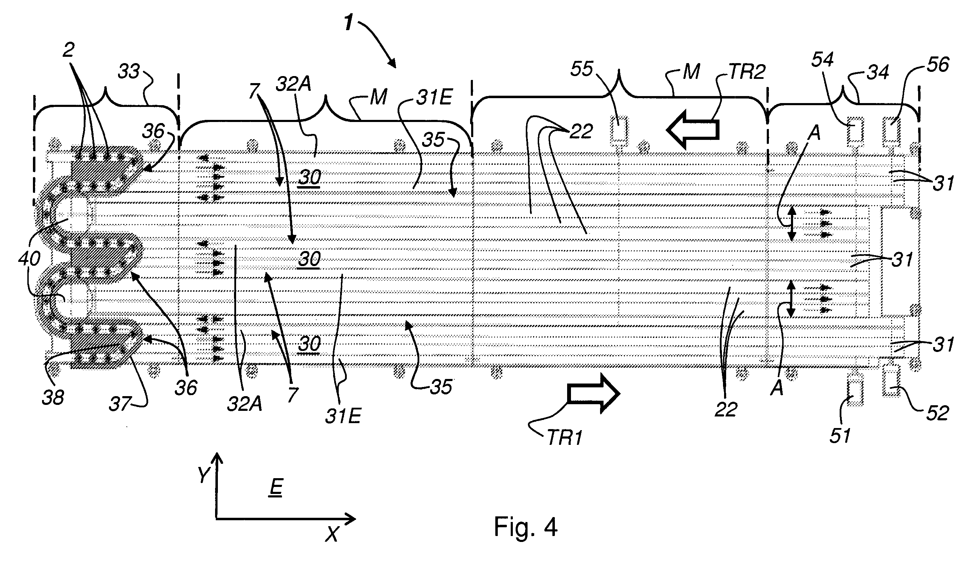

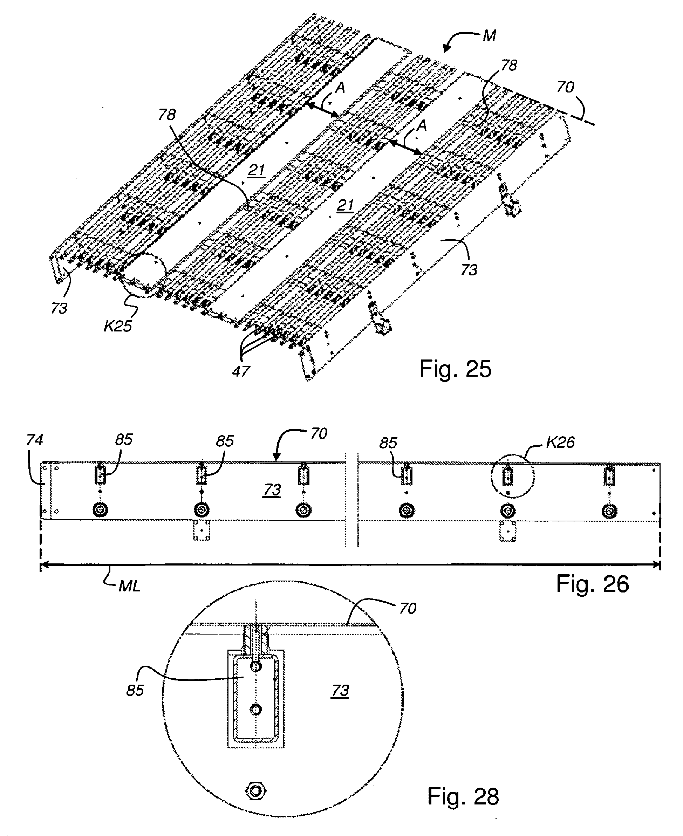

**Fig. 4** zeigt eine zweite Ausführungsform der erfindungsgemäßen Speichervorrichtung 1. Wie bereits in der Beschreibung zu Fig. 3 erwähnt, sind auch bei dieser Ausführungsform drei Speichermodule 30 parallel zueinander angeordnet. Die Speichervorrichtung 1 umfasst ein Stirnmodul 33 und ein Endmodul 34. Zwischen dem Stirnmodul 33 und dem Endmodul 34 sind bei der in **Fig. 4** gezeigten Darstellung zwei Zwischenmodule M eingesetzt. Die Zwischenmodule M haben eine einheitliche Modullänge ML (siehe **Fig. 26**). Jedem Speichermodul 30 ist eine Überleiteinheit 36 zugeordnet. Mit der Überleiteinheit 36 ist es möglich, von einem Einlaufband 31 E eines Speichermoduls 30 die Behälter auf ein Auslaufband 32A des Speichermoduls 30 überzuführen. Die Überleiteinheit 36 kann mit einer Verschiebeeinheit 35 parallel zu den Speichermodulen 30 verfahren werden, um somit die Speicherkapazität der erfindungsgemäßen Speichervorrichtung 1 je nach Bedarf zu verändern. Die Speichervorrichtung 1 ist ebenfalls aus drei Speichermodulen 30 aufgebaut, wobei ein anfängliches Speichermodul 30A, ein nachfolgendes Speichermodul 30N und ein letztes Speichermodul 30L vorgesehen ist. Die in die Speichervorrichtung 1 einlaufenden Behälter 2 werden mittels der jeweiligen Transfereinrichtung 40 vom anfänglichen Speichermodul 30A auf das nachfolgende Speichermodul 30N und von diesem auf das letzte Speichermodul 30L übergeführt. Die Behälter 2 verlassen das letzte Speichermodul 30L über ein dem letzten Speichermodul 30L zugeordnetes Auslaufband 32A. Analog zu der Beschreibung der in **Fig. 3** dargestellten Ausführungsform ist die Überleiteinheit 36 mit einer inneren Führung 38 und einer äußeren Führung 37 ausgestattet, um so sicher die Behälter 2 vom Einlaufband 31 E eines Moduls 30 auf das Auslaufband 32A des gleichen Moduls überzuführen. Die einzelnen Speichermodule 30 der Speichervorrichtung 1 sind mit einem Abstand A untereinander beabstandet. In dem Abstand A sind ebenfalls mehrere Bänder 22 eingesetzt. Die Bänder 22 bilden zusammen mit dem anfänglichen Speichermodul 30A, dem nachfolgendem Speichermodul 30N und dem letzten Speichermodul 30L eine Ebene E. Die evtl. in einem Modul umfallenden Behälter 2 können mittels der Bänder 22 zum Endmodul 34 transportiert werden.

Auch bei dieser Ausführungsform (**Fig. 4**) sind für den Antrieb der Vielzahl der in der Speichervorrichtung 1 vorhandenen Transferbänder 31, Einlaufbänder 31 E, Auslaufbänder 32A, Verschiebeeinheiten 35 und Bänder 22 mehrere Antriebseinrichtungen 51, 52, 54, 55 und 56 vorgesehen. Eine erste Antriebseinrichtung 51 dient zum Antrieb des Einlaufbandes 31 E des anfänglichen Speichermoduls 30A. Eine zweite Antriebseinrichtung 52 dient zum Antrieb des auf das Einlaufband 31 E des anfänglichen Speichermoduls 30A folgenden ersten Transferbandes 31. Eine dritte Antriebseinrichtung 54 dient zum Antrieb der dem anfänglichen Speichermodul 30A und dem nachfolgenden Speichermodul 30N gemeinsamen Endloskette 7, bestehend aus dem Auslaufband 32A des anfänglichen Speichermoduls 30A und dem Einlaufband 31 E des nachfolgenden Speichermoduls 30N, sowie des ersten Transferbandes 31 des nachfolgenden Speichermoduls 30N. Ferner dient die dritte Antriebseinrichtung 54 bei dieser Ausführungsform zum Antrieb der zwischen den Speichermodulen 30A, 30N und 30L vorgesehenen Austragsbändern bzw. Bändern 22 anstelle einer Abdeckung 21. Eine vierte Antriebseinrichtung 56 dient zum Antrieb der dem nachfolgenden Speichermodul 30N und dem letzten Speichermodul 30L gemeinsamen Endloskette 7, bestehend aus dem Auslaufband 32A des nachfolgenden Speichermoduls 30N und dem Einlaufband 31 E des letzten Speichermoduls 30L, sowie des Transferbandes 31 des letzten Speichermoduls 30L. Eine fünfte Antriebseinrichtung 55 dient zum Antrieb der Verschiebeeinheit 35.

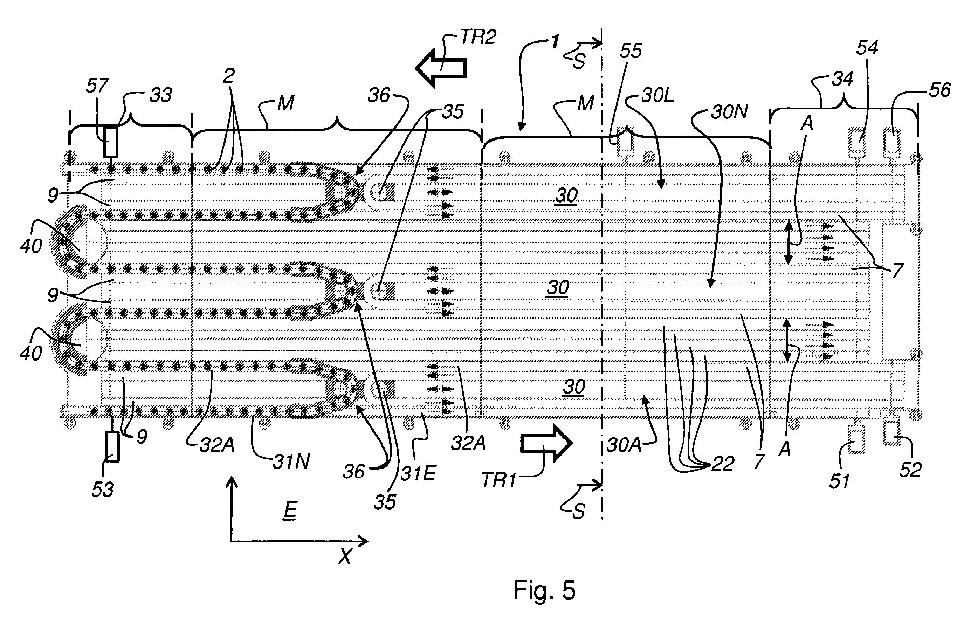

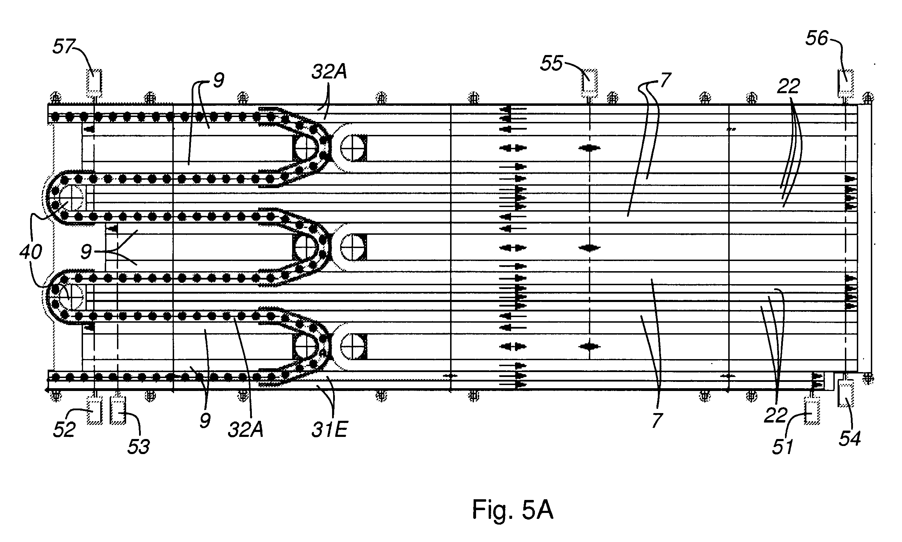

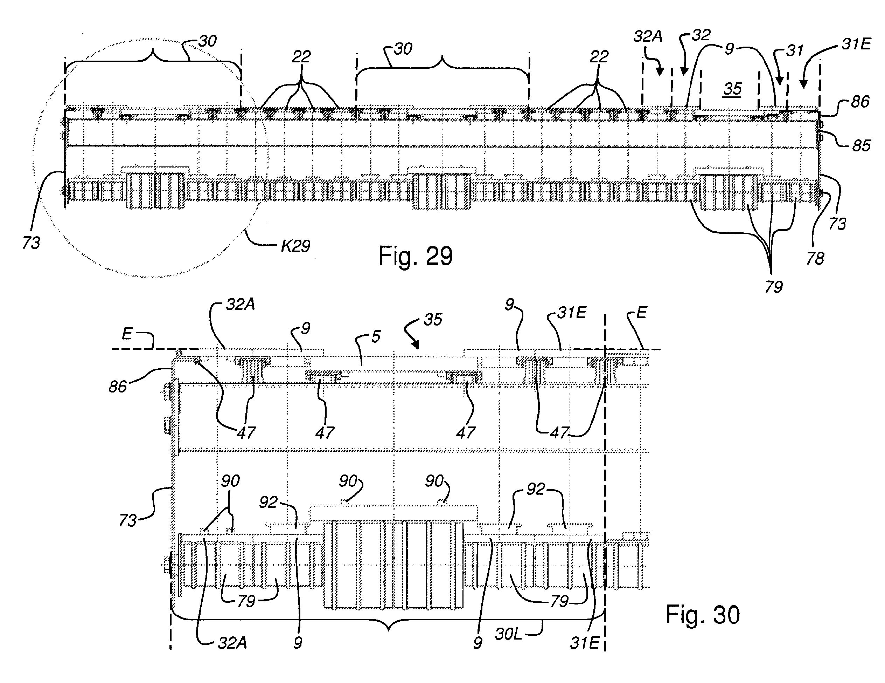

**Fig. 5** zeigt eine dritte Ausführungsform der erfindungsgemäßen Speichervorrichtung 1. Die erfindungsgemäße Speichervorrichtung 1 ist ebenfalls aus drei einzelnen Speichermodulen 30 aufgebaut, die parallel zueinander mit einem Abstand A angeordnet sind. In dem Abstand A zwischen den einzelnen Speichermodulen 30 sind ebenfalls mehrere Bänder 22 vorgesehen, die analog zu den bereits beschriebenen Ausführungsformen für den Austrag evtl. umgefallener Behälter 2 verwendet werden. Jedem Speichermodul 30 ist ebenfalls eine Überleiteinheit 36 zugeordnet, die die Behälter 2 vom Einlaufband 31 E auf das Auslaufband 32A eines jeden Moduls 30 überführt. Mittels der Anordnung der drei Überleiteinheiten 36 ist es somit möglich, die Behälter 2 vom Einlaufband 31 E eines anfänglichen Speichermoduls 30A auf ein Auslaufband 32A desselben Speichermoduls 30A überzuführen. Zwischen den einzelnen Modulen 30 ist im Stirnmodul 33 ebenfalls eine Transfereinrichtung 40 vorgesehen, so dass in Zusammenwirkung mit der entsprechenden Überleiteinheit 36 die Behälter 2 vom Einlaufband 31 E über das Auslaufband 32A eines anfänglichen Speichermoduls 30A auf ein Einlaufband 31 E eines nachfolgenden Speichermoduls 30N und weiter über dessen Auslaufband 32A auf ein Einlaufband 31 E eines letzten Speichermoduls 30L übergeführt werden können. Das Einlaufband 31 E eines jeden Speichermoduls 30 ist in einer ersten Transportrichtung TR1 antreibbar. Analog zu der ersten Transportrichtung TR1 sind auch die Bänder 22 antreibbar, die zwischen den einzelnen Modulen 30 angeordnet sind. Bei der in **Fig. 5** dargestellten Ausführungsform ist jedem Speichermodul 30 eine Verschiebeeinheit 35 zugeordnet. An den Verschiebeeinheiten 35 sind jeweils beidseitig ein Jalousieband 5 (siehe **Fig. 30**) befestigt, damit die erfindungsgemäße Speichervorrichtung 1 eine geschlossene Ebene E bildet und keine Behälter 2 zu Boden fallen können, sowie die Verschiebeeinheit positioniert werden kann. Die Überleiteinheiten 36 sitzen auf der Verschiebeeinheit 35. Die Verschiebeeinheiten 35 sind mittig in jedem der einzelnen Speichermodule 30 der erfindungsgemäßen Speichervorrichtung 1 angeordnet. Das Auslaufband 32A des letzten Speichermoduls 30L ist in einer zweiten Transportrichtung TR2 antreibbar, dass die Behälter 2 aus der erfindungsgemäßen Speichervorrichtung 1 austransportiert werden können.

Bei der dritten Ausführungsform der **Fig. 5** sind für den Antrieb der Vielzahl der in der Speichervorrichtung 1 vorhandenen Einlaufbänder 31 E, Auslaufbänder 32A, Verschiebeeinheiten 35, Endloskette 7, endlosen Überleitkette 9 und Bänder 22 mehrere Antriebseinrichtungen 51, 52, 53, 54, 55, 56 und 57 vorgesehen. Eine erste Antriebseinrichtung 51 dient zum Antrieb des Einlaufbandes 31 E des anfänglichen Speichermoduls 30A. Eine zweite Antriebseinrichtung 52 dient zum Antrieb der auf das Einlaufband 31 E des anfänglichen Speichermoduls 30A folgenden endlosen Überleitkette 9 in der ersten Transportrichtung TR1. Eine dritte Antriebseinrichtung 54 dient zum Antrieb der dem anfänglichen Speichermoduls 30A und dem nachfolgenden Speichermoduls 30N gemeinsamen Endloskette 7, bestehend aus dem Auslaufband 32A des anfänglichen Speichermoduls 30A und dem Einlaufband 31 E des nachfolgenden Speichermoduls 30N. Eine vierte Antriebseinrichtung 56 dient zum Antrieb der dem nachfolgenden Speichermodul 30N und dem letzten Speichermoduls 30L gemeinsamen Endloskette 7, bestehend aus dem Auslaufband 32A des nachfolgenden Speichermodul 30N und dem Einlaufband 31 E des letzten Speichermoduls 30L. Eine fünfte Antriebseinrichtung 55 dient zum Antrieb der Verschiebeeinheit 35. Eine sechste Antriebseinrichtung 53 dient zum Antrieb auf die dem Auslaufband 32A des nachfolgenden Speichermoduls 30N vorangehende, endlose Überleitkette 9 in eine zweite Transportrichtung TR2. Eine siebte Antriebseinrichtung 57 dient zum Antrieb auf die dem Auslaufband 32A des letzten Speichermoduls 30L vorangehende, endlose Überleitkette 9 in eine zweite Transportrichtung TR2.

Die dritte Antriebseinrichtung 54 kann ebenfalls zum Antrieb von mindestens einem Band 22 dienen, das zwischen dem anfänglichen Speichermodul 30A und dem nachfolgenden Speichermodul 30N sowie zwischen dem nachfolgenden Speichermodul 30N und dem letzten Speichermodul 30L vorgesehen ist.

**Fig. 5A** zeigt eine Variante der dritten Ausführungsform der erfindungsgemäßen Speichervorrichtung 1 mit einer weiteren bevorzugten Anordnung der Antriebseinrichtungen. Vorteilhaft wäre es auch möglich die zweite Antriebseinrichtung 52 in das Stirnmodul 33 zu integrieren. Dabei muss dann der Antrieb der zweiten Antriebseinrichtung 52 in die zweite Transportrichtung TR2 und die Zugkraft auf die dem Auslaufband 32A des anfänglichen Speichermoduls 30A vorangehende, endlose Überleitkette 9 erfolgen. Die dritte Antriebseinrichtung 54 dient zum Antrieb der dem anfänglichen Speichermoduls 30A und dem nachfolgenden Speichermoduls 30N gemeinsamen Endloskette 7, bestehend aus dem Auslaufband 32A des anfänglichen Speichermoduls 30A und dem Einlaufband 31 E des nachfolgenden Speichermoduls 30N. Die vierte Antriebseinrichtung 56 dient zum Antrieb der dem nachfolgenden Speichermodul 30N und dem letzten Speichermoduls 30L gemeinsamen Endloskette 7, bestehend aus dem Auslaufband 32A des nachfolgenden Speichermodul 30N und dem Einlaufband 31 E des letzten Speichermoduls 30L. Die dritte Antriebseinrichtung 54 kann ebenfalls zum Antrieb von mindestens einem Band 22 dienen, das zwischen dem anfänglichen Speichermodul 30A und dem nachfolgenden Speichermodul 30N vorgesehen ist, sowie die vierte Antriebseinrichtung 56 kann ebenfalls zum Antrieb von mindestens einem Band 22 dienen, das zwischen dem nachfolgenden Speichermodul 30N und dem letzten Speichermodul 30L vorgesehen ist. Vorteilhaft wird hier die Last der Bänder 22 verteilt auf zwei Antriebe. Durch die bevorzugte Anordnung der Antriebe der dritten Ausführungsform kann das Endmodul 34 im Endbereich ohne Absätze auskommen und erhöht somit die Zugänglichkeit sowie ein erhöhter Eingriffsschutz ist gegeben.

Um Behälter mit größeren Durchmessern auch verarbeiten zu können, kann bei Bedarf die Breite des Einlaufbandes 31 E des anfänglichen Speichermoduls 30A und die Breite des Auslaufbandes 32A des letzten Speichermoduls 30L vergrößert werden. Bevorzugter Weise sind das Einlaufband 31 E und das Auslaufband 32A durch zwei Standardketten gebildet. Die Transferketten 7 und die endlosen Überleitketten 9 sind zugkraftbedingt bereits breiter ausgeführt.

Alle anderen Antriebseinrichtungen 51, 53, 55 und 57 behalten ihre Funktion wie bereits in der Fig. 5 beschrieben.

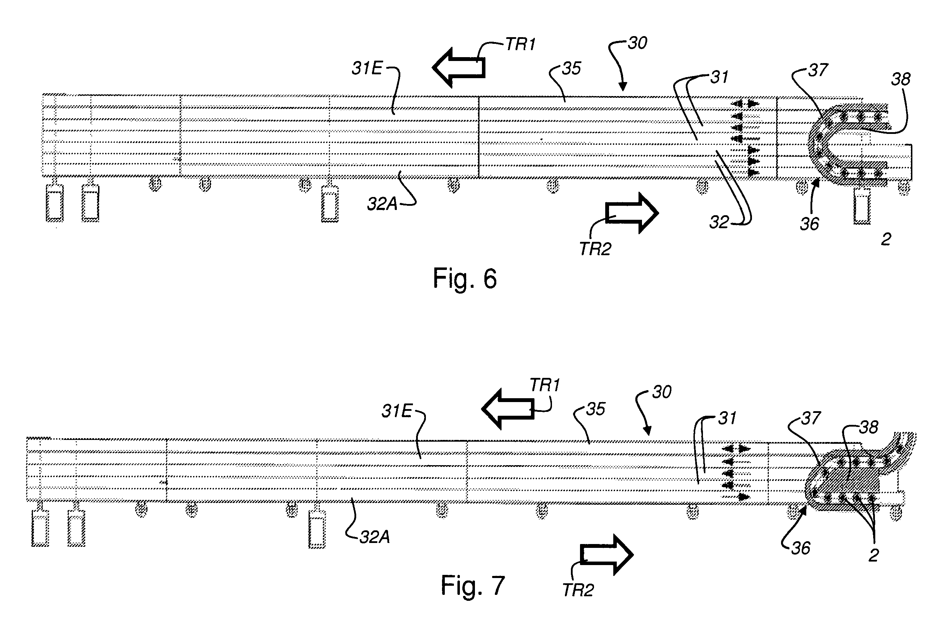

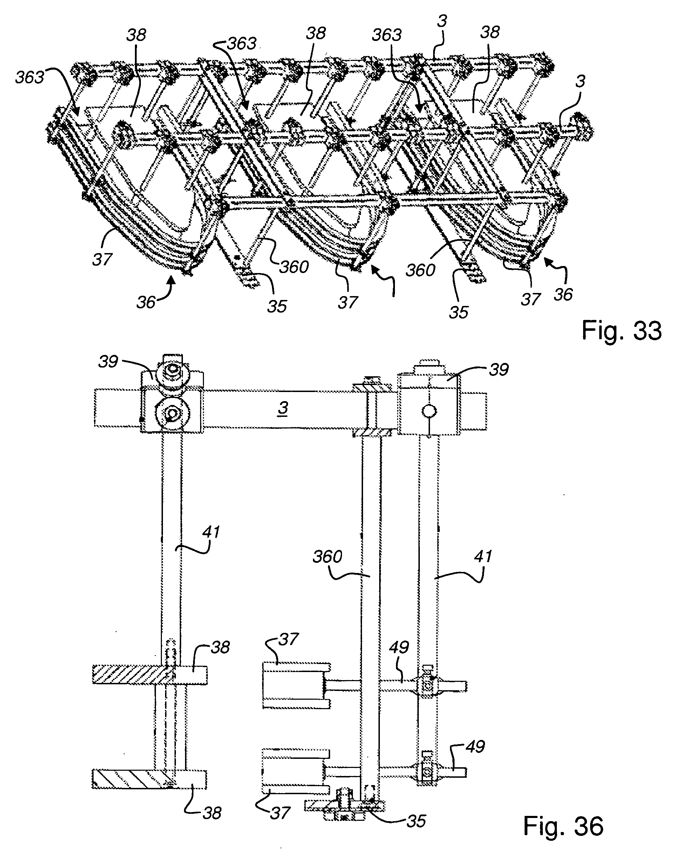

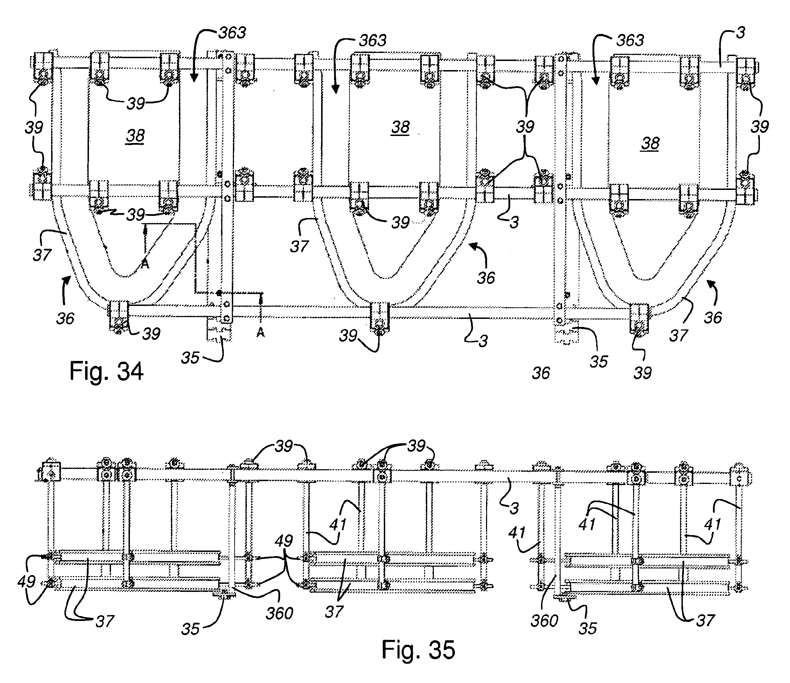

**Fig. 6** zeigt schematisch die Ausgestaltung eines Speichermoduls 30, wie es bei der in **Fig. 3** beschriebenen Ausführungsform der erfindungsgemäßen Speichervorrichtung 1 Verwendung findet. Das Speichermodul 30 besitzt ein Einlaufband 31 E und ein Transferband 31, die in einer ersten Transportrichtung TR1 angetrieben werden. Ein Auslaufband 32A und ein Transferband 32 sind in einer zweiten Transportrichtung TR2 antreibbar. Folglich sind somit zwischen dem Einlaufband 31 E und dem Auslaufband 32A zwei Transferbänder 31 und 32 vorgesehen. Dem Speichermodul 30 ist ebenfalls eine Verschiebeeinheit 35 zugeordnet. Dem Speichermodul 30 ist auch eine Überleiteinheit 36 zugeordnet. Die Überleiteinheit 36 umfasst eine äußere Führung 37 und eine innere Führung 38. Entlang einer ersten Transportrichtung TR1 laufen die Behälter 2 über das Einlaufband 31 E in das Modul 30 ein. Die Überleiteinheit 36 führt die Behälter 2 vom Einlaufband 31 E des Moduls 30 auf das Auslaufband 32A des gleichen Moduls 30 über. Die äußere Führung 37 und die innere Führung 38 der Überleiteinheit 36 bilden eine Gasse 363 (siehe **Fig. 33** **und** **34**), so dass die Behälter 2 vom Einlaufband 31 E über die beiden Transferbänder 31 und 32 auf das Auslaufband 32A übergeführt werden können.

**Fig. 7** zeigt eine Draufsicht einer weiteren Ausgestaltung des Speichermoduls 30, wie es bei der in **Fig. 4** beschriebenen Ausführungsform der erfindungsgemäßen Speichervorrichtung 1 Verwendung findet. Das Speichermodul 30 besitzt ein Einlaufband 31 E und ein Transferband 31, die in einer ersten Transportrichtung TR1 antreibbar sind. Ein Auslaufband 32A ist in einer zweiten Transportrichtung TR2 antreibbar. Das zweite Transferband 32 ist gleichzeitig das Auslaufband 32A der hier dargestellten Ausführungsform des Speichermoduls 30. Somit ist zwischen dem Einlaufband 31 E und dem Auslaufband 32A mindestens ein weiteres erstes Transferband 31 angeordnet. Dem Speichermodul 30 kann ebenfalls eine Verschiebeeinheit 35 zugeordnet sein, mit der die Überleiteinheit 36 eines jeden Speichermoduls 30 je nach erforderlicher Speicherkapazität verschoben werden kann.

Die Überleiteinheit 36 für das Speichermodul 30 der in **Fig. 7** dargestellten Ausführungsform besitzt ebenfalls eine äußere Führung 37 und eine innere Führung 38. Die äußere Führung 37 und die innere Führung 38 bilden zusammen eine Gasse 363 (siehe **Fig. 33** **und** **34**) für die Behälter 2. Die äußere Führung 37 und die innere Führung 38 sind im Bereich des Einlaufbandes 31 E und des benachbarten ersten Transferbandes 31 des Speichermoduls 30 derart ausgeformt, dass die gebildete Gasse 363 im Wesentlichen schräg über das mindestens eine erste Transferband 31 verläuft. Die Behälter 2 gelangen somit unmittelbar auf das Auslaufband 32A des Speichermoduls 30.

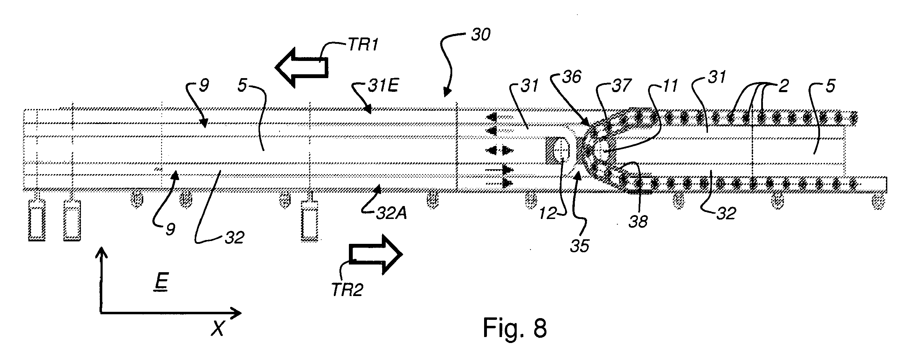

**Fig. 8** zeigt eine Ausführungsform des Speichermoduls 30, wie es bei der Ausführungsform der Speichervorrichtung 1 aus **Fig. 5** Verwendung findet. Das Speichermodul 30 umfasst ein Einlaufband 31 E, das in einer ersten Transportrichtung TR1 angetrieben wird. Ferner umfasst das Speichermodul 30 ein zweites Auslaufband 32A, das in einer zweiten Transportrichtung TR2 antreibbar ist. Ferner sind zwischen dem Einlaufband 31 E und dem Auslaufband 32A eines jeden Speichermoduls 30 ein weiteres erstes Transferband 31 und ein weiteres zweites Transferband 32 vorgesehen.

Das zwischen dem Einlaufband 31 E und dem Auslaufband 32A vorgesehene erste Transferband 31 und zweite Transferband 32 sind als endlose Überleitkette 9 ausgebildet. Die Verschiebeeinheit 35 für die einem jeden Speichermodul 30 zugeordnete Überleiteinheit 36 ist bei dieser Ausführungsform mittig in jedem Speichermodul 30 angeordnet. Die Überleiteinheit 36 sitzt auf der Verschiebeeinheit 35, die wiederum mit einem Jalousieband 5 beidseitig verbunden ist. Durch das Jalousieband 5 wird somit eine einheitliche geschlossene Oberfläche bzw. Ebene E für jedes Speichermodul 30 gebildet. Die jeweilige Überleiteinheit 36 überführt die Behälter 2 vom Einlaufband 31 E auf das Auslaufband 32A des Speichermoduls 30. Jede Überleiteinheit 36 besitzt bei der in **Fig. 8** beschriebenen Ausführungsform die endlose Überleitkette 9, die aus den einzelnen Transferbänder 31 und 32 besteht. Der Verlauf der endlosen Überleitkette 9 folgt dem ersten Transferband 31 bis zur ersten Umlenkscheibe 11 mit einer ersten Transportrichtung TR1, wird an der Umlenkscheibe 11 horizontal umgelenkt und gelangt somit als Transferband 32 in die zweite Transportrichtung TR2. Zurück am Stirnmodul 33 wird das zweite Transferband nun vertikal umgelenkt und folgt einer Führung unterhalb der geschlossenen Oberfläche bzw. Ebene E in einer ersten Transportrichtung TR1 bis zur erneuten vertikalen Umlenkung am Endmodul 34. Daraufhin befindet sich die zweite Transferkette 32 wieder oberhalb der geschlossenen Oberfläche bzw. Ebene E und verläuft erneut in die zweite Transportrichtung TR2 bis zur zweiten horizontalen Umlenkung 12. Dort wird das zweite Transferband 32 erneut umgelenkt und wird somit wieder zum ersten Transferband 31 in eine erste Transportrichtung TR1. Mittels zweier vertikaler Umlenkungen an Endmodul 34 und Stirnmodul 33 wird der Verlauf der endlosen Überleitkette 9 wieder geschlossen.

**Fig. 9** zeigt eine Draufsicht der ersten Ausführungsform der erfindungsgemäßen Speichervorrichtung 1, bei der die Speicherkapazität der Speichervorrichtung 1 voll ausgeschöpft ist. Die Speichervorrichtung 1 besteht aus dem Stirnmodul 33 und dem Endmodul 34. Zwischen dem Stirnmodul 33 und dem Endmodul 34 sind bei der in **Fig. 9** dargestellten Ausführungsform drei Zwischenmodule M eingesetzt. Die Speichervorrichtung 1 besitzt drei Speichermodule 30, die parallel zueinander und mit einem Abstand A angeordnet sind. Bei der in **Fig. 9** gezeigten Ausführungsform sind in dem Abstand A zwischen den Speichermodulen 30 keine Bänder 22 eingesetzt. Anstatt der Bänder 22 ist es ebenso möglich, eine Abdeckung 21 zu verwenden, so dass eine einheitliche und geschlossene Ebene E für die Speichervorrichtung 1 erzielt werden kann. Die Behälter 2 laufen entlang einer ersten Transportrichtung TR1 auf einem Einlaufband 31 E eines anfänglichen Speichermoduls 30A in die Speichervorrichtung 1 ein. Letztendlich verlassen die Behälter 2 die Speichervorrichtung 1 über ein Auslaufband 32A eines letzten Speichermoduls 30L der Speichervorrichtung 1 entlang einer zweiten Transportrichtung TR2. Die Überleiteinheiten 36, von denen jeweils eine einem Speichermodul 30 zugeordnet ist, befinden sich im Bereich des Endmoduls 34 der Speichervorrichtung 1. Bei dieser in **Fig. 9** gezeigten Stellung der Überleiteinheiten 36 kann die volle Speicherkapazität der Speichervorrichtung 1 genützt werden. Am Stirnmodul 33 der Speichervorrichtung 1 ist zwischen jeweils zwei aufeinander folgenden Modulen 30 eine Transfereinrichtung 40 angeordnet. In der zwischen dem anfänglichen Speichermodul 30A und dem nachfolgenden Speichermodul 30N angeordneten Transfereinrichtung 40 ist es möglich, die Behälter 2 vom Auslaufband 32A des anfänglichen Speichermoduls 30A auf das Einlaufband 31 E des nachfolgenden Speichermoduls 30N überzuführen. Mit der zwischen dem nachfolgenden Speichermodul 30N und dem letzten Speichermodul 30L angeordneten Transfereinrichtung 40 ist es möglich, die Behälter 2 vom Auslaufband 32A des nachfolgenden Speichermoduls 30N auf das Einlaufband 31 E des letzten Speichermoduls 30L überzuführen.

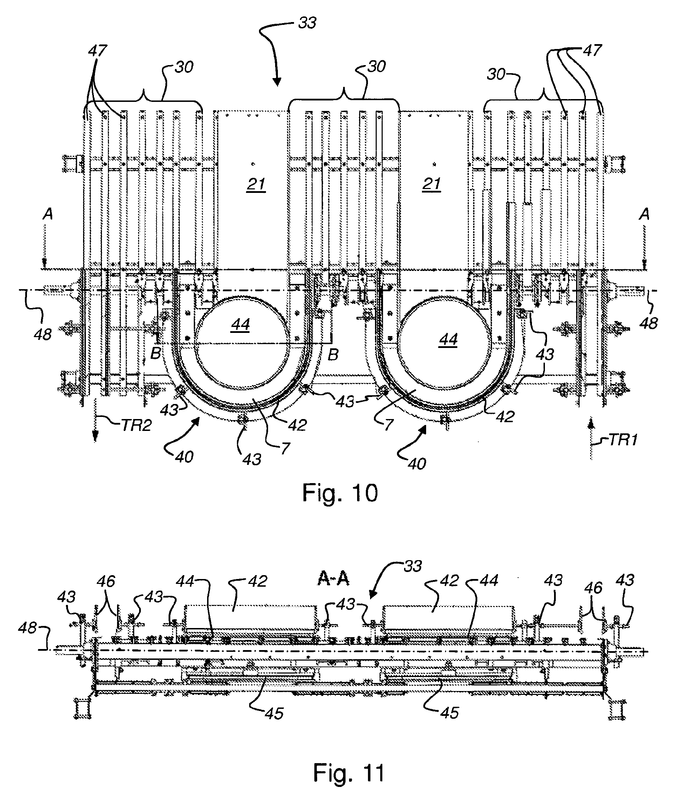

Gemäß den in **Fig. 3 bis 5A** beschriebenen Ausführungsbeispielen der Speichervorrichtung ist zwischen zwei aufeinander folgenden Speichermodulen 30 eine Transfereinrichtung 40 vorgesehen. Jede Transfereinrichtung 40 besteht im Wesentlichen aus einer Endloskette 7 und einer am Stirnmodul 33 angebrachten oberen Umlenkung 44 und unteren Umlenkung 45 (siehe **Fig. 11**). Die obere Umlenkung 44 und die untere Umlenkung 45 sind derart in der Speichervorrichtung 1 angeordnet, dass die Endloskette 7 das Auslaufband 32A des anfänglichen Speichermoduls 30A und das Einlaufband 31 E des nachfolgenden Speichermoduls 30N bildet.

**Fig. 10** zeigt eine Draufsicht einer ersten Ausführungsform des Stirnmoduls 33 der erfindungsgemäßen Speichervorrichtung 1. In der hier gezeigten Darstellung sind die Transportbänder nicht eingezeichnet. Das Stirnmodul 33 ist für eine Speichervorrichtung 1 ausgestaltet, die aus drei Speichermodulen 30 aufgebaut ist. Das Speichermodul 30 trägt eine Vielzahl von Auflageschienen 47, auf denen die angetriebenen Transportbänder laufen. Wie bereits in der Beschreibung zu **Fig. 9** erwähnt, ist zwischen zwei aufeinander folgenden Speichermodulen 30 jeweils eine Transfereinrichtung 40 angeordnet. Die Transfereinrichtung 40 besteht aus einer oberen Umlenkung 44 und einer unteren Umlenkung 45 (siehe **Fig. 11**). Mittels der oberen Umlenkung 44 und der unteren Umlenkung 45 wird die Endloskette 7 umgelenkt, die somit, wie bereits in **Fig. 9** beschrieben, sowohl das Auslaufband 32A des anfänglichen Moduls 30A als auch das Einlaufband 31 E des nachfolgenden Speichermoduls 30N bildet. Bei der in **Fig. 10** gezeigten Darstellung, im Bereich der Transfereinrichtung 40, laufen die Behälter 2 (hier nicht dargestellt) in der ersten Transportrichtung TR1 in das Stirnmodul 33 ein. Die Behälter 2 verlassen das Stirnmodul 33 entlang der zweiten Transportrichtung TR2. Zwischen den parallel angeordneten Speichermodulen 30 ist eine Abdeckung 21 vorgesehen. Die Abdeckung 21 ist erforderlich, damit die Speichervorrichtung 1 die einheitliche und geschlossene Ebene E ausbildet. Die Endloskette 7 ist dabei um die kreisförmige obere Umlenkung 44 gelegt. Dem Außenrand der Endloskette 7 ist ein Geländer 42 zugeordnet. Mittels des Geländers 42 wird verhindert, dass Behälter 2 während der Umlenkung der Endloskette 7 von der Speichervorrichtung 1 herunterfallen. Mit einer Vielzahl von Einstellelementen 43 kann das Geländer 42 an die mit der Speichervorrichtung 1 zu speichernden Behälter 2 angepasst werden, so dass ein freier und ungehinderter Transport bzw. Umlenkung der Behälter 2 innerhalb der Speichervorrichtung 1 gewährleistet ist. Mit dem Stirnmodul 33 sind ferner alle Antriebswellen 48 verbunden, über die die einzelnen Transportbänder mit Hilfe von Motoren (hier nicht dargestellt) angetrieben werden können.

**Fig. 11** zeigt eine Ansicht des Stirnmoduls 33, aus der in **Fig. 10** dargestellten Blickrichtung A-A. Das der oberen Umlenkung 44 zugeordnete Geländer 42 und die Gassengeländer 46 können jeweils mit einer Vielzahl von Einstellelementen 43 auf die Breite der zu transportierenden Behälter 2 eingestellt werden. Fig. 11 zeigt ferner die der oberen Umlenkung 44 zugeordnete untere Umlenkung 45 für die Endloskette 7.

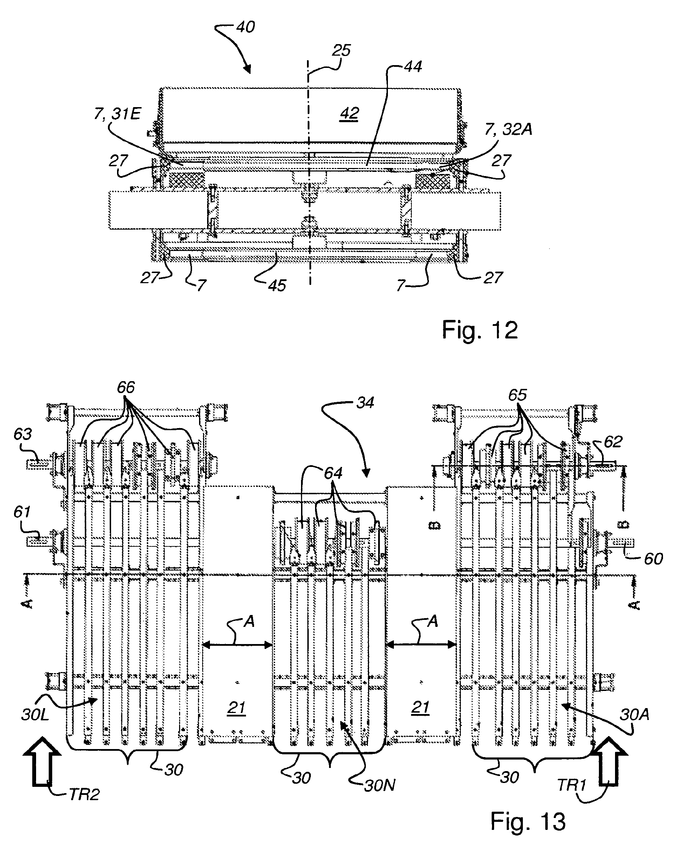

**Fig. 12** zeigt eine Detailansicht des in **Fig. 10** mit B-B bezeichneten Schnitt durch eine Transfereinrichtung 40. Das Geländer 42 ist dabei derart angeordnet, dass es von der Oberfläche der oberen Umlenkung 44 und der um die obere Umlenkung 44 geschlungenen Endloskette 7 beabstandet ist. Die obere Umlenkung 44 und die untere Umlenkung 45 sind um eine gemeinsame Achse 25 drehbar ausgebildet. Durch die Drehbarkeit der oberen Umlenkung 44 und der unteren Umlenkung 45 wird die Umlenkung der Endlosketten 7 erleichtert. Die Endloskette 7 liegt mit einem Rand an der oberen Umlenkung 44 bzw. an der unteren Umlenkung 45 an. Mit dem anderen Rand liegt die Endloskette 7 an einer Führung 27 an. Somit ist die Endloskette 7 vollständig geführt und kann nicht herausspringen. Bei der in **Fig. 12** gezeigten Ansicht wirkt der auf der rechten Seite der **Fig. 12** mit der oberen Umlenkung 44 in Kontakt stehende Abschnitt der Endloskette 7 als Auslaufband 32A eines Moduls 30. Der auf der linken Seite der **Fig. 12** mit der oberen Umlenkung 44 in Kontakt stehende Abschnitt der Endloskette 7 stellt das Einlaufband 31 E eines nachfolgenden Speichermoduls 30N dar.

**Fig. 13** zeigt eine Draufsicht einer ersten Ausführungsform des Endmoduls 34 der Speichervorrichtung 1. Die in **Fig. 13** dargestellte Ausführungsform des Endmoduls 34 ist für eine Speichervorrichtung 1 geeignet, die aus drei Speichermodulen 30 aufgebaut ist. In dem Abstand A zwischen den einzelnen Modulen 30 ist eine Abdeckung 21 vorgesehen, so dass die einheitliche und geschlossene Ebene E der Speichervorrichtung 1 erzielt wird. Das Endmodul 34 dient im Wesentlichen dazu, die Transportbänder der einzelnen Speichermodule 30 umzulenken, damit diese im unteren Bereich der Speichervorrichtung 1 zurück zum Stirnmodul 33 geführt werden. Das anfängliche Speichermodul 30A, das nachfolgende Speichermodul 30N sowie das letzte Speichermodul 30L werden von mehreren Wellen 60 bis 63 durchzogen. Von der Welle 60 kann eine entsprechende Antriebseinrichtung angreifen. Die Welle 60 trägt mehrere Scheiben 64, so dass mehrere Transportbänder angetrieben, bzw. umgelenkt werden können. Dem anfänglichen Speichermodul 30A ist ferner eine Welle 62 zugeordnet, die ebenfalls mit einer Antriebseinrichtung verbunden werden kann. Auf der Welle 62 sitzen ebenfalls mehrere Scheiben 65, mittels denen die Transportbänder des anfänglichen Speichermoduls 30A angetrieben bzw. umgelenkt werden können. Am letzten Speichermodul 30L sitzt eine Welle 61, die bis in den Bereich des nachfolgenden Speichermoduls 30N reicht. In diesen Bereich des nachfolgenden Speichermoduls 30N sitzen ebenso mehrere Scheiben 64, mittels denen die Transportbänder des nachfolgenden Speichermoduls 30N angetrieben bzw. umgelenkt werden können. Desweiteren sitzt am letzten Speichermodul 30N eine Welle 63, die ebenfalls mehrere Scheiben 66 trägt. Mittels dieser Scheiben 66 ist es möglich, die Transportbänder des letzten Speichermoduls 30L anzutreiben bzw. umzulenken.

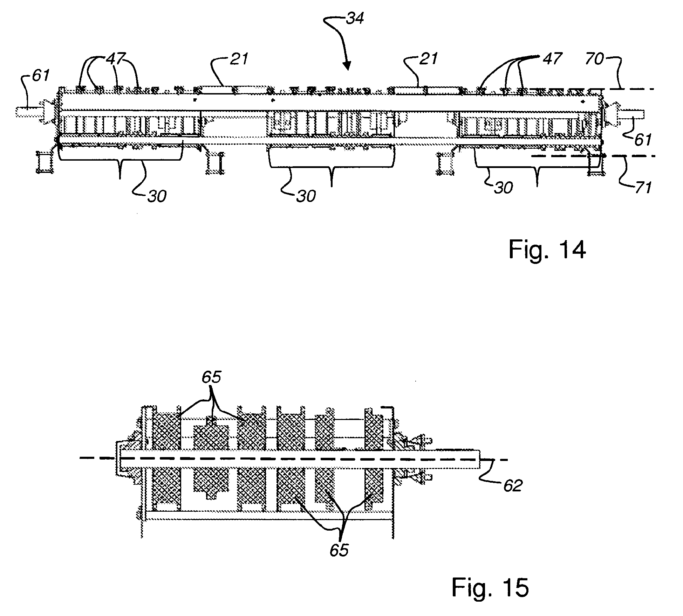

**Fig. 14** zeigt eine Ansicht des Endmoduls 34 aus **Fig. 13** entlang der in **Fig. 13** mit A-A gekennzeichnete Schnittlinie. Auf der Oberseite 70 der Speichervorrichtung 1 sind jedem Speichermodul 30 mehrere Auflageschienen 47 zugeordnet. Die einzelnen Speichermodule 30 sind mittels der Abdeckung 21 voneinander beabstandet. Mittels der Welle 61 können im Wesentlichen die Transportbänder (hier nicht dargestellt) des nachfolgenden Speichermoduls 30N angetrieben werden. Auf der Unterseite 71 der Speichervorrichtung 1 werden die Transportbänder zum Stirnmodul 33 zurückgeführt.

**Fig. 15** zeigt eine Schnittansicht der in **Fig. 13** mit B-B gekennzeichnete Schnittlinie. Die Welle 62 sitzt, wie aus **Fig. 13** ersichtlich, am anfänglichen Speichermodul 30A des Endmoduls 34. Die auf der Welle 62 sitzenden Scheiben 65 dienen zum Führen, Umlenken und/oder Antreiben der einzelnen Transportbänder (nicht dargestellt) des anfänglichen Speichermoduls 30A.

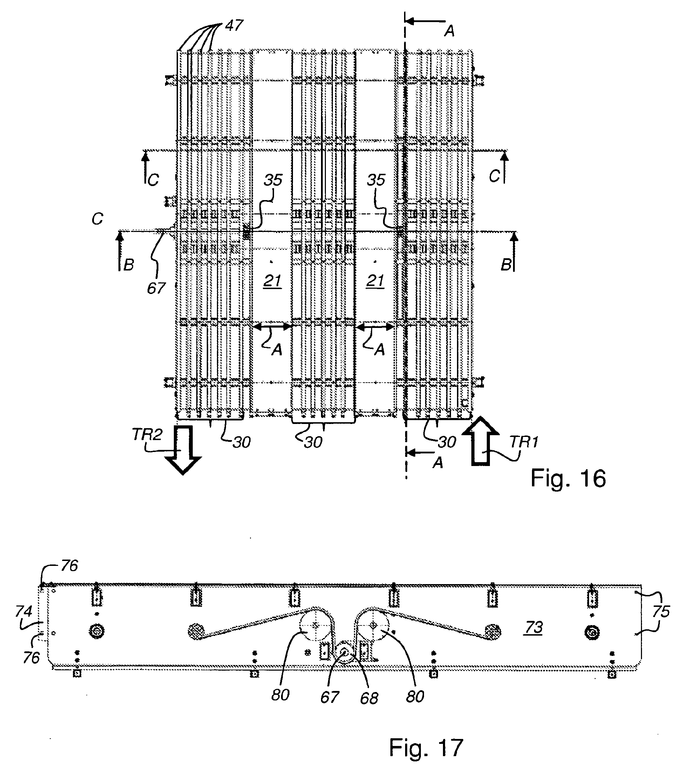

**Fig. 16** zeigt eine Draufsicht einer Ausführungsform eines Speichermoduls M, welches zwischen dem Stirnmodul 33 und dem Endmodul 34 eingesetzt ist. Das in **Fig. 16** gezeigte Zwischenmodul M trägt ebenfalls eine Welle 67. An dieser Welle 67 greift ebenfalls eine Antriebseinrichtung an, die letztendlich für die Bewegung der Verschiebeeinheiten 35 sowohl in der ersten Transportrichtung TR1 als auch in der zweiten Transportrichtung TR2 sorgen. Das in **Fig. 16** gezeigte Zwischenmodul M muss mindestens zwischen dem Endmodul 34 und dem Stirnmodul 33 angeordnet sein, denn nur so ist es möglich, die Verschiebeeinheiten 35 entsprechend der erforderlichen Speicherkapazität der Speichervorrichtung 1 zu verfahren. Das Zwischenmodul M besteht ebenfalls aus drei einzelnen Speichermodulen 30, die unter einem Abstand A zueinander angeordnet sind. In dem Abstand A zwischen den einzelnen Speichermodulen 30 ist die Abdeckung 21 angeordnet, um somit eine einheitliche und geschlossene Oberfläche bzw. Ebene E der Speichervorrichtung bzw. des Zwischenmoduls M zu schaffen. Die einzelnen Speichermodule 30 tragen die Auflageschienen 47 für die Transportbänder (nicht dargestellt) der Speichervorrichtung 1.

**Fig. 17** zeigt eine Schnittansicht der in **Fig. 16** mit A-A gekennzeichneten Schnittlinie und somit die Seitenansicht eines Rahmenteils 73, wie es bei dem Aufbau des Zwischenmoduls M verwendet wird. An einem Ende trägt das Rahmenteil 73 eine Lasche 74. Die Lasche 74 hat mehrere Bohrungen 76 ausgebildet. Ebenso sind an dem Ende des Rahmenteils 73, welches der Lasche 74 gegenüberliegt, mehrere Bohrungen 75 ausgebildet. Für den Fall, dass zwischen dem Stirnmodul 33 und dem Endmodul 34 mehr als zwei Zwischenmodule M eingesetzt werden, kann über die Lasche 74 das Zwischenmodul M mit einem weiteren Zwischenmodul M verbunden werden. Um dies zu erreichen, werden durch die Bohrungen 76 der Lasche 74 des mit dem bereits vorhandenen Zwischenmodul M zu verbindenden weiteren Zwischenmoduls M Bolzen (nicht dargestellt) durch die Bohrungen 75 des bereits vorhandenen Zwischenmoduls M geführt. Auf diese Weise ist es möglich, je nach Bedarf des Kunden die Länge der Speichervorrichtung 1 einzustellen, basierend auf einer modularen Bauweise. Ferner ist in dieser Ansicht der Kettenverlauf der Verschiebeeinheit 35 um den Antrieb (hier nicht dargestellt) gezeigt, der an der Welle 67 angreift. Zur Übertragung des Drehmoments auf die Kette der Verschiebeeinheit 35 sind auf der Welle 67 Kettenantriebsräder 68 montiert. Um die Antriebsräder 68 der Kette der Verschiebeeinheit 35 mit einer maximalen Umschlingung zu versorgen, sind zusätzliche Führungswellen 78 mit Umlenkrollen 80 eingesetzt. Ebenso sind auf diesen Führungswellen 78 neben den Umlenkrollen 80 die Rollen 79 der übrigen Bänder für die Kettenrückführung vorgesehen.

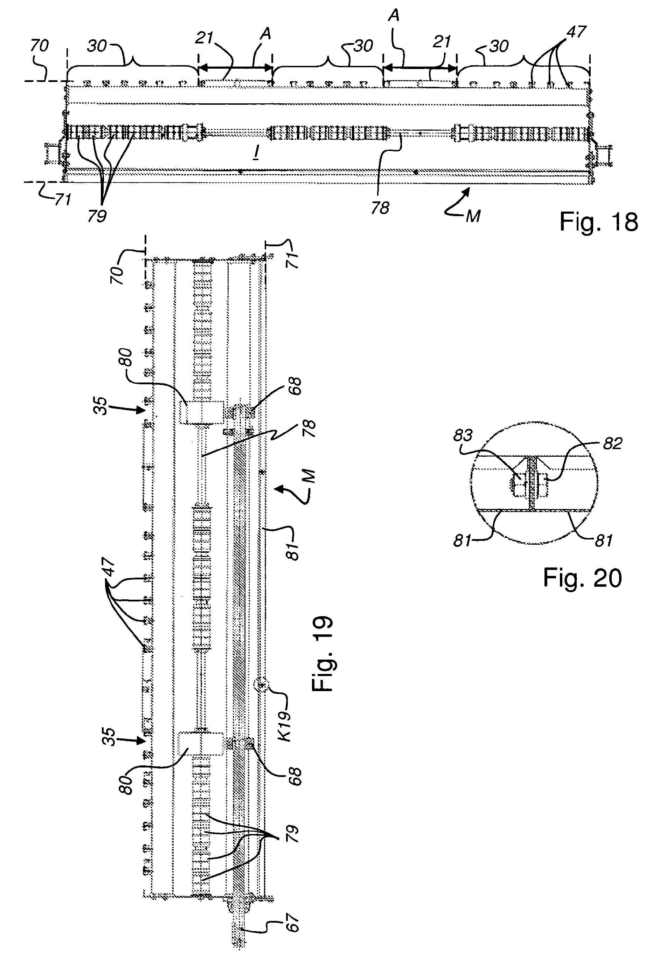

**Fig. 18** zeigt einen Schnitt durch das Zwischenmodul M entlang der in **Fig. 16** dargestellten Schnittlinie C-C. Das Zwischenmodul M ist kastenförmig aufgebaut. Auf der Oberseite 70 des Zwischenmoduls M sind die Vielzahl der Auflageschienen 47 angebracht, auf denen die Transportbänder (nicht dargestellt) der einzelnen Speichermodule 30 geführt werden. Die Speichermodule 30 sind ebenfalls mit einem Abstand A untereinander beabstandet. Innerhalb der kastenförmigen Bauweise des Zwischenmoduls M ist mindestens eine Führungswelle 78 angeordnet. Mittels der Führungswelle 78 ist es möglich, die Transportbänder im inneren Bereich I des Zwischenmoduls M vom Endmodul 34 zum Stirnmodul 33 zurückzuführen. Die ersten Transferbänder 31, die zweiten Transferbänder 32, die Einlaufbänder 31 E, die Auslaufbänder 32A, die Verschiebeeinheit 35 und die Bänder 22 liegen dabei auf entsprechend zugeordneten Walzen 79 der Führungswelle 78 auf.

**Fig. 19** zeigt eine Ansicht des Zwischenmoduls M entlang der in **Fig. 16** mit B-B gekennzeichneten Schnittlinie. Der Welle 67 des Zwischenmoduls M sind zwei weitere Führungswellen 78 zugeordnet, die ebenfalls zur Führung der Transportbänder (nicht dargestellt) eine Vielzahl von Rollen 79 tragen. Ferner trägt die Führungswelle 78 mehrere Umlenkrollen 80, wobei jede Umlenkrolle 80 direkt der Verschiebeeinheit 35 auf der Oberseite 70 des Zwischenmoduls M zugeordnet ist. Die Welle 67 ist durch die Antriebsräder 68 in direkten Wirkkontakt zur Verschiebeeinheit 35. Die mit der Welle 67 verbundene Antriebseinrichtung (nicht dargestellt) wird betätigt, falls innerhalb der Speichereinrichtung 1 eine erhöhte Kapazität zur Speicherung der Behälter 2 benötigt wird. Die Verschiebeeinheit 35 kann entsprechend der erforderlichen Speicherkapazität auf der Oberseite 70 des Zwischenmoduls M verfahren werden. Das Zwischenmodul M ist auf der Unterseite 71 mit einer Abdeckung 81 versehen.

**Fig. 20** zeigt eine vergrößerte Darstellung des in **Fig. 19** mit K19 gekennzeichneten Bereichs. Die Abdeckung 81 ist ebenfalls modular aufgebaut. Die einzelnen Module der Abdeckung 81 können mit einer Schraube 82 und einer Mutter 83 miteinander verbunden werden. Auf diese Weise ist ebenfalls ein schneller und einfacher Zugang in das Innere I des Speichermoduls M möglich.

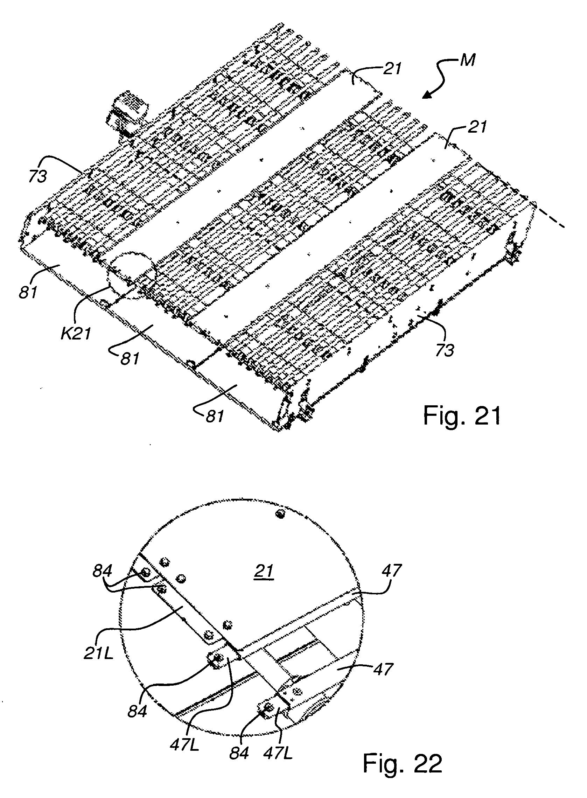

**Fig. 21** zeigt eine perspektivische Ansicht des Zwischenmoduls M, welches mit einer Antriebseinrichtung zur Bewegung der Verschiebeeinheit 35 (hier nicht dargestellt) entlang des Zwischenmoduls M verbunden ist. In **Fig. 21** wird die Kastenbauweise des Zwischenmoduls M ersichtlich. Auf der Unterseite 71 ist das Zwischenmodul M mit der Abdeckung 81 versehen. Zur seitlichen Stabilisation des Zwischenmoduls M sind die Rahmenteile 73 vorgesehen, welche die Oberseite 70 mit der Unterseite 71 des Zwischenmoduls M verbinden.

**Fig. 22** zeigt eine vergrößerte Darstellung des in **Fig. 21** mit K21 gekennzeichneten Bereichs. Die Abdeckung 21 hat mindestens eine Lasche 21 L ausgebildet. Ebenso haben die Auflageschienen 47 jeweils eine Lasche 47L ausgebildet. Mittels dieser Laschen 21 L und 47L ist es möglich, Zwischenmodule M untereinander zu verbinden. Hierzu tragen die Laschen 21 L der Abdeckung 21 und die Laschen 47L der Auflageschienen 47 entsprechende Befestigungselemente 84, mit denen die einzelnen und aufeinander folgenden Zwischenmodule M der Speichervorrichtung 1 miteinander verbunden werden können.

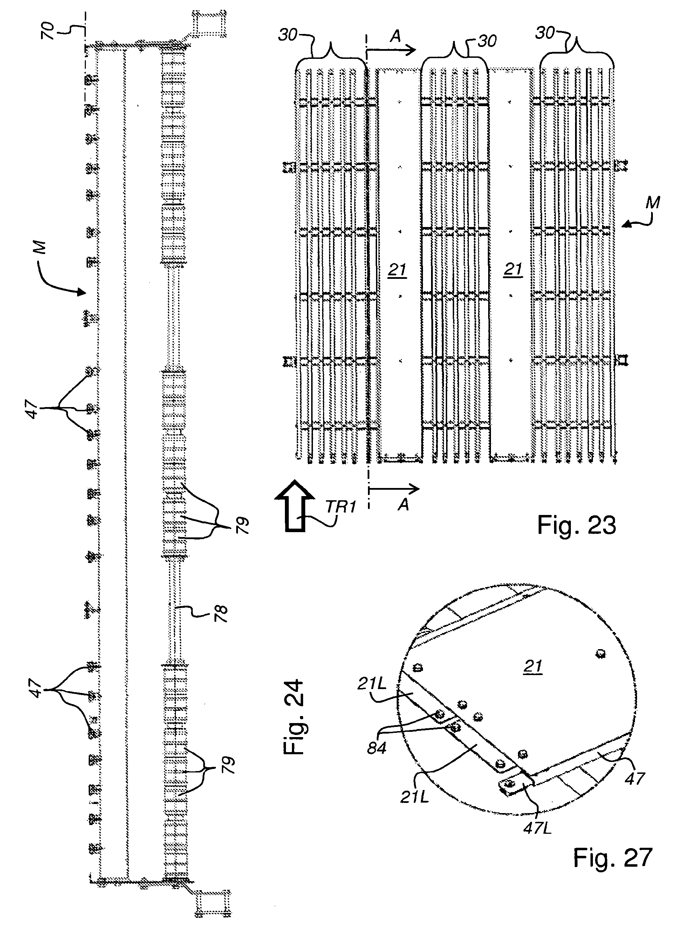

**Fig. 23** zeigt eine Draufsicht eines Zwischenmoduls M, welches lediglich für die Führung der Transportbänder der Speichereinrichtung 1 vorgesehen ist. Dieses in **Fig. 23** dargestellte Zwischenmodul M dient lediglich zur Erhöhung der Länge bzw. der Speicherkapazität der Speichervorrichtung 1. Das Zwischenmodul M besteht analog zu dem bereits in **Fig. 16** beschriebenen Zwischenmodul M ebenfalls aus drei Speichermodulen 30, die in einem Abstand A zueinander angeordnet sind. In dem Abstand A zwischen den Speichermodulen 30 ist die Abdeckung 21 vorgesehen.

**Fig. 24** zeigt eine Ansicht des Zwischenmoduls M aus der ersten Transportrichtung TR1. Zwischen den seitlichen Rahmenteilen 73 (siehe **Fig. 17****,** **21****,** **25, 26**) des Zwischenmoduls M ist hier ebenfalls mindestens eine Führungswelle 78 eingesetzt. Die Führungswelle 78 trägt eine Vielzahl von Rollen 79, die für die Rückführung der auf der Oberseite 70 des Zwischenmoduls M bewegten Transportbänder (hier nicht dargestellt) vorgesehen sind. Die Transportbänder liegen auf der Oberseite 70 des Zwischenmoduls M auf den dafür vorgesehenen Auflageschienen 47 auf.

**Fig. 25** zeigt eine perspektivische Ansicht des Zwischenmoduls M, das keine Antriebseinrichtung für die Bewegung der Verschiebeeinheit 35 umfasst. Das Zwischenmodul M ist ebenfalls in einer kastenförmigen Bauweise dargestellt und trägt mindestens zwei seitliche Rahmenteile 73 zur Stabilisation bzw. zur Halterung von weiteren Bauelementen (nicht dargestellt).

**Fig. 26** zeigt eine Ansicht entlang der in **Fig. 23** dargestellten Schnittlinie A-A. Das Rahmenteil 73 umfasst ebenfalls eine Lasche 74, mittels der die einzelnen und aufeinander folgenden Zwischenmodule M der Speichervorrichtung 1 verbunden werden können. Mittels dieser modularen Bauweise ist es auf einfache Art und Weise möglich, die Länge der Speichervorrichtung 1 auf die Bedürfnisse des Kunden einzustellen. Wie bereits erwähnt, haben alle Zwischenmodule M eine einheitliche Modullänge ML. Ferner trägt das Rahmenteil 73 mehrere Aufnahmen 85, die zur Befestigung weiterer Bauelemente (nicht dargestellt) der Speichervorrichtung 1 dienen.

**Fig. 27** zeigt eine vergrößerte Darstellung des in **Fig. 25** mit K25 gekennzeichneten Bereichs. Die Abdeckung 21 ist mit mindestens einer Lasche 21 L versehen. Ebenso ist jede Auflageschiene 47 mit einer Lasche 47L versehen. Die Laschen 21 L und 47L tragen entsprechende Befestigungselemente 84, mit denen es möglich ist, die einzelnen und aufeinander folgenden Zwischenmodule M untereinander zu verbinden.

**Fig. 28** zeigt eine vergrößerte Darstellung des aus **Fig. 26** mit K26 gekennzeichneten Bereichs. Das Rahmenteil 73 trägt mehrere Aufnahmen 85, die zur Befestigung eines weiteren Bauelements (nicht dargestellt) der Speichervorrichtung 1 dienen.

**Fig. 29** zeigt eine Schnittansicht der in **Fig. 5** dargestellten dritten Ausführungsform der Speichervorrichtung 1 entlang der Schnittlinie S-S. Bei der in **Fig. 29** dargestellten Ausführungsform sind ebenfalls drei Speichermodule 30 parallel zueinander angeordnet. Zwischen den einzelnen Speichermodulen 30 sind hier Transportbänder 22 vorgesehen, die entlang der ersten Transportrichtung TR1 angetrieben werden können, damit evtl. umgefallene Behälter 2 in Richtung des Endmoduls 34 transportiert werden können. Zwischen den beiden seitlichen Rahmenteilen 73 ist eine Führungswelle 78 angebracht, die mit den Rollen 79 eine Führung für die Transportbänder bildet, um diese zurück zum Stirnmodul 33 der Speichervorrichtung 1 zu fördern. Die einzelnen Transportbänder, wie zum Beispiel die Einlaufbänder 31 E, die ersten Transferbänder 31, die zweiten Transferbänder 32, die Auslaufbänder 32A, die Bänder 22 bzw. die Verschiebeeinheiten 35 liegen dabei auf einer Vielzahl von Rollen 79 auf. Für die Beschreibung zu **Fig. 29** wird davon ausgegangen, dass die erste Transportrichtung TR1 in die Zeichenebene hinein gerichtet ist. Zwischen dem Einlaufband 31 E und dem Auslaufband 32A folgt unmittelbar die endlose Überleitkette 9. In der Mitte des anfänglichen Speichermoduls 30A ist die Verschiebeeinheit 35 angeordnet, von der das Jalousieband 5 (siehe **Fig. 30**) abgebildet ist.

**Fig. 30** zeigt eine vergrößerte Darstellung des in **Fig. 29** mit K29 gekennzeichneten Bereichs. In **Fig. 30** wird folglich die Ausgestaltung des letzten Speichermoduls 30L beschrieben. Auf der Oberseite 70 der Speichervorrichtung 1 liegen die einzelnen Transportbänder des letzten Speichermoduls 30L auf den hierzu vorgesehenen Führungen 47 auf. Das Auslaufband 32A des letzten Speichermoduls 30L besitzt an der den Führungen 47 zugewandten Seite zwei Fortsätze 90, die für eine seitliche Stabilisierung und Führung des auslaufenden Transportbandes 32A sorgen. In der Mitte zwischen dem einlaufenden Transportband 31 E und dem auslaufenden Transportband 32A ist das Jalousieband 5 der Verschiebeeinheit 35 vorgesehen. Das Jalousieband 5 hat ebenfalls zwei Fortsätze 90 ausgebildet, die für eine seitliche Führung des Jalousiebandes 5 sorgen. Zwischen dem einlaufenden Transportband 31 E und dem Jalousieband 5 sowie zwischen dem Jalousieband 5 und dem auslaufenden Transportband 32A ist die endlose Überleitkette 9 angeordnet. Die endlose Überleitkette 9 besitzt an der den Führungen 47 zugewandten Seite einen TAB-Führung 92. Mit der TAB-Führung 92 stützt sich die endlose Überleitkette 9 einmal seitlich an der Führung 47 mit dem Jalousieband 5 ab. Hinzu kommt, dass die TAB-Führung 92 unter die Führung 47 greift und somit für eine sichere Führung der Überleitkette 9 in der Ebene E sorgt. Das Einlaufband 31 E des letzten Speichermoduls 30L ist ebenfalls mit einer TAB-Führung 92 ausgebildet. Mit der TAB-Führung 92 des Einlaufbandes 31 E erzielt man eine seitliche Führung zwischen den Auflageschienen 47 und gleichzeitig eine Führung des Einlaufbandes 31 E innerhalb der Ebene E. Somit sind alle Endlosbänder 7 und 9 gegen ein seitliches Aufsteigen in den horizontalen Umlenkungen 11, 12, 44 und 45 gesichert.

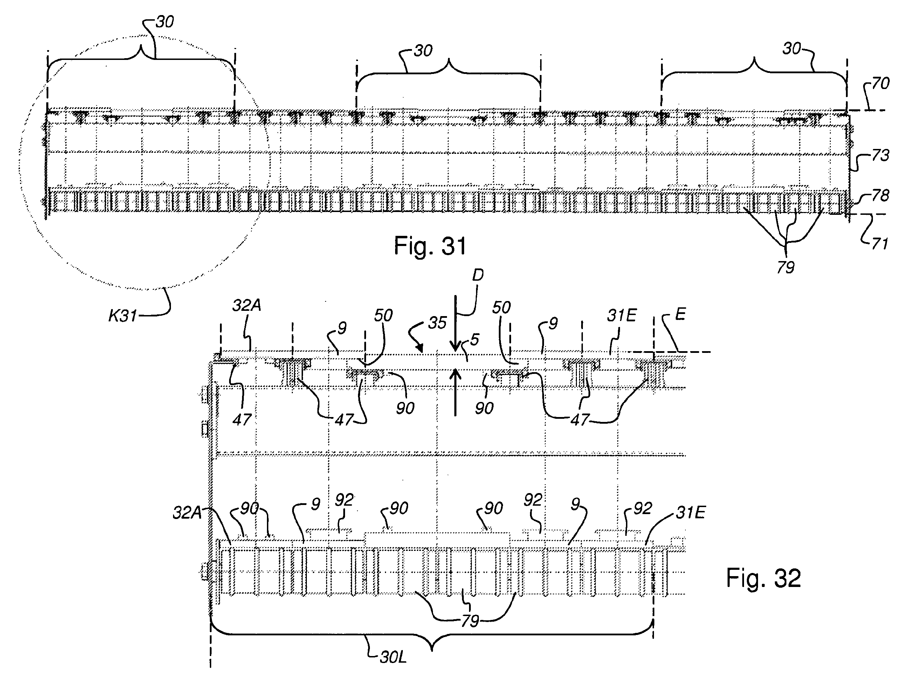

In **Fig. 31** ist ebenfalls die Schnittansicht der in **Fig. 5** dargestellten Ausführungsform der Speichervorrichtung 1 entlang der Schnittlinie S-S gezeigt. Der Unterschied der **Fig. 31** zu **Fig. 29** ist, dass die einzelnen Transportbänder bzw. die Auflagen der einzelnen Transportbänder anders ausgestaltet sind. Ein wesentlicher Unterschied ist, dass die zwischen den seitlichen Rahmenteilen 73 angeordnete Führungswelle 78 eine Vielzahl von Rollen 79 trägt, die allesamt den gleichen Durchmesser aufweisen. Im Vergleich zu **Fig. 29** sind die Rollen 79 für die Führung des Jalousiebandes 5 unterhalb der Oberseite 70 der Speichervorrichtung 1 mit dem gleichen Durchmesser ausgebildet wie die übrigen Rollen 79.

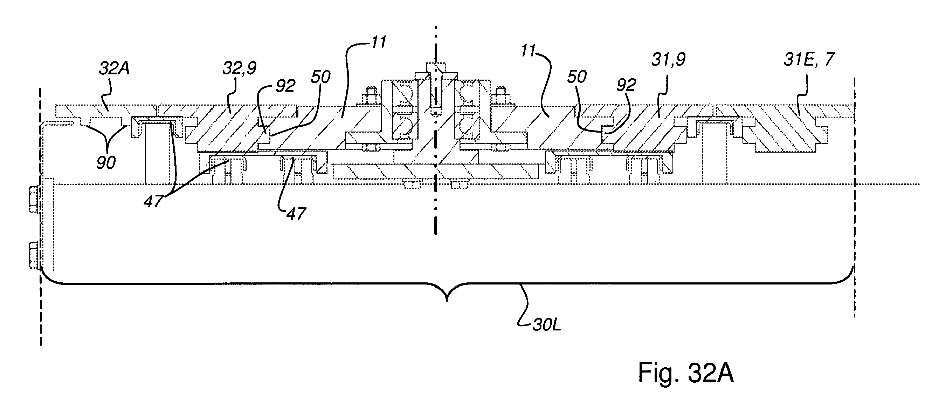

**Fig. 32** zeigt eine vergrößerte Darstellung des in **Fig. 31** mit K31 gekennzeichneten Bereichs. Es wird ebenfalls das letzte Speichermodul 30L im Querschnitt beschrieben. Die Ausgestaltung der einzelnen Transportbänder in den anderen Speichermodulen 30 ist analog. Das auslaufende Transportband 32A im letzten Speichermodul 30Lbesitzt zwei Fortsätze 90, mit denen sich das auslaufende Transportband 32A an den Auflageschienen 47 seitlich abstützt. In der Mitte zwischen dem Einlaufband 31 E und dem Auslaufband 32A ist das Jalousieband 5 der Verschiebeeinheit 35 vorgesehen. Das Jalousieband 5 besitzt an der den Auflageschienen 47 zugewandten Seite ebenfalls zwei Fortsätze 90, mit denen sich das Jalousieband 5 seitlich an den Auflageschienen 47 abstützt und geführt ist. Zwischen dem einlaufenden Transportband 31 E und dem Jalousieband 5 sowie zwischen dem Jalousieband 5 und dem auslaufenden Transportband 32A ist die endlose Überleitkette 9 vorgesehen. Die endlose Überleitkette 9 besitzt ebenfalls auf der den Auflageschienen 47 zugewandten Seite eine TAB-Führung 92. Diese TAB-Führung 92 ist an der Auflageschiene 47 geführt, die sowohl dem auslaufenden Transportband 32A, als auch der endlosen Überleitkette 9 sowie dem einlaufenden Transportband 31 E mit der endlosen Überleitkette 9 gemeinsam ist. Zur Abstützung bzw. Führung der endlosen Überleitkette 9 hat das Jalousieband 5 eine größere Kettenhöhe D. Anstelle der materialaufwendigen, höheren Kette kann auch eine dünne Kette mit U-förmiger Kontur oder seitlich angebrachten Stegen für die seitliche Erhöhung eingesetzt werden. Damit wird über die gesamte Länge der Speichermodule die endlose Überleitkette 9 gegenüber dem Jalousieband 5 seitlich geführt, unabhängig von der Stellung der Überleiteinheit 36. Im Bereich der Verschiebeeinheit 31 übernimmt die Umlenkung 11 und 12 die innenliegende Führung der Überleitkette 9 mit einem Eingriff in die obere Nut 50. Analog erfolgt ein Eingriff der Umlenkungen 44 und 45, sowie der Führung 27 an der Außenseite, in die TAB-Führung der EndlosKette 7. Somit sind wiederum alle Endlosbänder 7 und 9 gegen ein seitliches Aufsteigen in den horizontalen Umlenkungen 11, 12, 44 und 45 gesichert.

**Fig. 32A** zeigt eine vergrößerte Schnittdarstellung durch die Verschiebeeinheit des in Fig. 31 mit K31 gekennzeichneten Bereichs, allerdings mit einer weiteren bevorzugten Variante der TAB-Ketten und deren Führung . Es wird ebenfalls das letzte Speichermodul 30L im Querschnitt beschrieben. Die Ausgestaltung der einzelnen Transportbänder in den anderen Speichermodulen 30 ist analog. Das auslaufende Transportband 32A im letzten Speichermodul 30L besitzt zwei Fortsätze 90, mit denen sich das auslaufende Transportband 32A an den Auflageschienen 47 seitlich abstützt. In der Mitte zwischen dem Einlaufband 31 E und dem Auslaufband 32A ist die erste Umlenkscheibe 11 der Verschiebeeinheit 35 vorgesehen. Die Umlenkscheibe 11 ist auf einer Verschiebeeinheit 35 drehbar gelagert, und die Verschiebeeinheit 35 wird von Auflageschienen 47 abgestützt und geführt. Zwischen dem einlaufenden Transportband 31 E und der Umlenkscheibe 11, sowie zwischen der Umlenkscheibe 11 und dem auslaufenden Transportband 32A ist die endlose Überleitkette 9 vorgesehen. Die endlose Überleitkette 9 besitzt ebenfalls auf der den Auflageschienen 47 zugewandten Seite eine TAB-Führung 92. Diese TAB-Führung 92 ist an der Auflageschiene 47 seitlich geführt, die sowohl dem auslaufenden Transportband 32A, als auch der endlosen Überleitkette 9 sowie dem einlaufenden Transportband 31 E mit der endlosen Überleitkette 9 gemeinsam ist. Im Bereich der Verschiebeeinheit 35 übernimmt die Umlenkung 11 und 12 die innenliegende Führung der Überleitkette 9 mit einen Eingriff in die obere Nut 50. Die außenliegende Führung der endlosen Überleitkette 9 im Bereich der Verschiebeeinheit 35 erfolgt ebenfalls durch eine gegenüberliegende kreisförmige Führung eingearbeitet in die Tragplatte (nicht gezeigt) der Verschiebeeinheit 35. Analog erfolgt ein Eingriff der Umlenkungen 44 und 45, sowie der Führung 27 an der Außenseite, in die TAB-Führung der EndlosKette 7. Somit sind wiederum alle Endlosbänder 7 und 9 gegen ein seitliches Aufsteigen in den horizontalen Umlenkungen 11, 12, 44 und 45 gesichert.

**Fig. 33** zeigt eine perspektivische Ansicht von drei Überleiteinheiten 36, von denen jede einem Speichermodul 30 zugeordnet ist. Jede Überleiteinheit 36 umfasst eine äußere Führung 37 und eine innere Führung 38. Die äußere Führung 37 und die innere Führung 38 sind derart angeordnet, dass eine Gasse 363 ausgebildet ist, in der die zu speichernden bzw. zu führenden Behälter 2 vom Einlaufband 31 E eines Speichermoduls 30 auf ein Auslaufband 32A des Speichermoduls 30 übergeführt werden. Die einzelnen Überleiteinheiten 36 sind an einem Traggerüst 3 montiert. Mittels mindestens einer Stütze 360 sitzt das gesamte Traggerüst 3 auf der Verschiebeeinheit 35. Bei der in **Fig. 33** dargestellten Ausführungsform sind zwei Verschiebeeinheiten 35 vorgesehen, so dass mindestens zwei Stützen 360 vorgesehen sind, die das Traggerüst 3 mit den Verschiebeeinheiten 35 verbinden. Durch diese Anordnung ist es möglich, die Überleiteinheiten 36 frei und linear über den jeweiligen Speichermodulen 30 zu verschieben.

**Fig. 34** zeigt eine Draufsicht auf das Traggerüst 3 mit den daran angeordneten drei Überleiteinheiten 36 nach **Fig. 33**. Die innere Führung 38 und die äußere Führung 37 einer jeden Überleiteinheit 36 ist mit entsprechenden Befestigungselementen 39 am Traggerüst 3 montiert. Alternativ kann die äußere Führung 37 durch ein Garniturenteil ersetzt werden. Dieses wird in eine vorbereitete Führung eingeschoben und mittels eines Schnellverschlusses arretiert. Zum Wechseln wird die Überleiteinheit in Transportrichtung TR1 bis zum Endmodul 34 verfahren, da dort eine freie Zugänglichkeit zu allen Speichermodulen 30 der Speichervorrichtung 1 gegeben ist. Somit kann auf einfache und schnelle Weise z. B. die Breite einer Gasse 363 verändert werden.

**Fig. 35** zeigt eine Frontansicht der Anordnung der Überleiteinheiten 36 nach **Fig. 33** in Transportrichtung. Von einer Vielzahl von Armen 41 hängt die innere Führung 38 und die äußere Führung 37 einer jeden Überleiteinheit 36. Die Stäbe bzw. Stützen 360, welche die Überleiteinheiten 36 auf der Verschiebeeinheit 35 abstützen, sind ebenfalls verstellbar am Traggerüst 3 befestigt. Die Arme 41 tragen Verstellelemente 49 (siehe **Fig. 35**), mit denen es auf einfache Weise möglich ist, die Gassenbreite bzw. die Stellung der äußeren Führung 37 zu verändern.

**Fig. 36** zeigt die Ansicht aus der in **Fig. 34** mit A-A gekennzeichneten Schnittlinie. Die Überleiteinheit 36 ist mit Armen 41 am Traggerüst 3 verstellbar befestigt. Einer der Tragearme 41 trägt die innere Führung 38, die aus zwei Führungselementen besteht. Ebenso trägt ein weiterer Arm 41 die äußere Führung 37, die ebenfalls aus zwei unabhängig voneinander verstellbaren Führungselementen besteht. Die äußere Führung 37 ist selbst an einem Verstellelement 49 angeordnet. Mit dem Verstellelement 49 ist es möglich, die Breite der durch die innere Führung 38 und die äußere Führung 37 gebildeten Gasse 363 (siehe **Fig. 33**) einzustellen. Mittels eines Stabes bzw. einer Stütze 360 sitzt das Traggerüst 3 auf der Verschiebeeinheit 35. Wie bereits vorher beschrieben, kann mittels der Verschiebeeinheit 35 das Traggerüst 3 mit der mindestens einen Überleiteinheit 36 derart verfahren werden, dass eine Speicherkapazität der Speichervorrichtung 1 eingestellt werden kann.

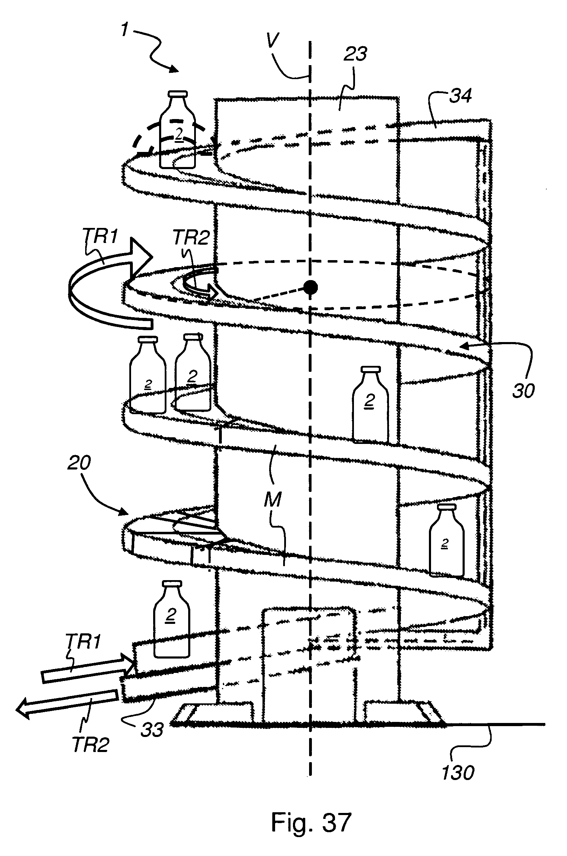

**Fig. 37** zeigt eine weitere Ausführungsform der erfindungsgemäßen Speichervorrichtung 1. Hier ist ein Speichermodul 30 zu einer vertikalen Helix 20 geformt. Die Helix 20 ist an einem Träger 23 montiert und erstreckt sich in vertikaler Richtung V. Das Speichermodul 30 umfasst ebenfalls ein Stirnmodul 33 und ein Endmodul 34. Zwischen dem Stirnmodul 33 und dem Endmodul 34 ist mindestens ein Zwischenmodul M eingesetzt. Die Anzahl der Zwischenmodule M zwischen dem Stirnmodul 33 und dem Endmodul 34 richtet sich nach der für die Speichervorrichtung 1 geforderten insgesamten Länge. Die Zwischenmodule M sind entsprechend in Form der Helix 20 gebogen und weisen eine konstante Modullänge ML auf. Die in die Speichervorrichtung 1 entlanglaufenden Behälter 2 werden entlang der Helix 20 über ein Einlaufband 31 E entsprechend in vertikaler Richtung V transportiert. Das Speichermodul 30 weist ebenfalls eine Verschiebeeinheit 35 auf, auf der die Überleiteinheit 36 sitzt. Mittels der Überleiteinheit 36 werden die Behälter 2 vom Einlaufband 31 E auf das Auslaufband 32A des Speichermoduls 30 übergeführt. Das Auslaufband 32A führt die Behälter 2 wiederum zum Stirnmodul 33 zurück, das sich im Bereich der Aufstellfläche 130 für die Speichervorrichtung 1 gemäß der in **Fig. 37** dargestellten Ausführungsform befindet. Die Verschiebeeinheit 35 wird, wie bereits beschrieben, entlang des zu der Helix 20 geformten Speichermoduls 30 verfahren, um somit die Speicherkapazität der Speichervorrichtung 1 zu verändern. Die Überleitung der Behälter 2 vom einlaufenden Band 31 E auf das auslaufende Band 32A ist bei den vorher beschriebenen Ausführungsformen bereits ausführlich behandelt worden.

Ferner offenbart die Erfindung ebenfalls ein Verfahren zum Speichern von Behältern 2 nach dem FIFO-Prinzip. Eine Speichervorrichtung 1 empfängt von einer ersten Behälterbehandlungseinrichtung 110 (siehe **Fig. 1**) die Behälter 2 auf einem Einlaufband 31 E. Das Einlaufband 31 E ist Bestandteil eines Speichermoduls 30 der Speichervorrichtung 1. Die Behälter 2, welche sich in der Speichervorrichtung 1 befinden, werden mittels einer Überleiteinheit 36, die eine innere Führung 38 und eine äußere Führung 37 besitzt, vom Einlaufband 31 E des Speichermoduls 30 auf ein Auslaufband 32A des Speichermoduls 30 bzw. der Speichervorrichtung 1 übergeleitet. Die Behälter 2 werden beim Überleiten vom Einlaufband 31 E auf das Auslaufband 32A über mindestens zwei weitere antreibbare Transportbänder 31, 32 geführt. Zur Einstellung der erforderlichen Speicherkapazität der Speichervorrichtung 1 ist eine Steuerungs- und Regeleinheit 105 vorgesehen, die mit der Behälterbehandlungsanlage 100 verbunden ist. Dem Speichermodul 30 bzw. den Speichermodulen 30 ist jeweils eine Verschiebeeinheit 35 zugeordnet, so dass mit der Verschiebeeinheit 35 die Überleiteinheit 36 aufgrund der erforderlichen Speicherkapazität parallel entlang des Einlaufbandes 31 E bzw. des Auslaufbandes 32A verschoben werden kann. Die erforderliche Speicherkapazität wird von der Steuerungs- und Regeleinheit 105 ermittelt und entsprechend an die Steuerung der Verschiebeeinheit 35 übergeben.

Es ist für einen Fachmann selbstverständlich, dass zum Antrieb der verschiedenen Transportbänder (Einlaufband 31 E, Auslaufband 32A, Transportbänder 31, 32, usw.) verschiedene Antriebseinrichtungen vorgesehen sein müssen. Die Antriebseinrichtungen sind dabei derart auszugestalten, dass ein reibungsloser und individuell steuerbarer Antrieb der einzelnen Transportbänder, bzw. der Verschiebeeinheit 35 gewährleistet ist.

Die Erfindung wurde unter Bezugnahme auf bevorzugte Ausführungsformen beschrieben. Es ist für einen Fachmann jedoch selbstverständlich, dass Änderungen und Abwandlungen der Erfindung gemacht werden können, ohne dabei den Schutzbereich der nachstehenden Ansprüche zu verlassen.

**Bezugszeichen Liste**

| | |
|---|---|
| 1 | Speichervorrichtung |
| 2 | Artikel (Behälter) |
| 3 | Traggerüst |
| 5 | Jalousieband |
| 50 | obere Nut/Kante |
| 7 | Endloskette |
| 9 | endlose Überleitkette |
| 10 | Einlauf |
| 11 | erste Umlenkscheibe |
| 12 | zweite Umlenkscheibe |
| 14 | Auslauf |
| 20 | vertikale Helix |
| 21 | Abdeckung |
| 21L | Lasche der Abdeckung |
| 22 | Band |
| 23 | Träger |
| 25 | Achse |
| 27 | äußere Führung Endloskette |
| 30 | Speichermodul |
| 30A | anfängliches Speichermodul |
| 30N | nachfolgendes Speichermodul |
| 30L | letztes Speichermodul |
| 31 | erstes Transferband |
| 31E | Einlaufband des Speichermoduls |
| 32 | zweites Transferband |
| 32A | Auslaufband des Speichermoduls |
| 33 | Stirnmodul |
| 34 | Endmodul |
| 35 | Verschiebeeinheit |
| 36 | Überleiteinheit |
| 37 | äußere Führung |
| 38 | innere Führung |
| 39 | Befestigungselement |
| 40 | Transfereinrichtung |
| 41 | Arm |
| 42 | Geländer |
| 43 | Einstellelement |
| 44 | obere Umlenkung |
| 45 | untere Umlenkung |
| 46 | Gassengeländer |
| 47 | Auflageschiene |
| 47L | Lasche Auflageschiene |
| 48 | Antriebswelle |
| 49 | Verstellelement |
| 51 | erste Antriebseinrichtung; Antrieb |
| 52 | zweite Antriebseinrichtung; Antrieb |
| 53 | dritte Antriebseinrichtung; Antrieb |
| 54 | vierte Antriebseinrichtung; Antrieb |
| 55 | fünfte Antriebseinrichtung Antrieb |
| 56 | sechste Antriebseinrichtung; Antrieb |
| 57 | siebte Antriebseinrichtung; Antrieb |
| 60 | Welle |
| 61 | Welle |
| 62 | Welle |
| 63 | Welle |
| 64 | Scheibe |
| 65 | Scheibe |
| 66 | Scheibe |
| 67 | Welle |
| 68 | Antriebsrad |
| 70 | Oberseite |
| 71 | Unterseite |
| 73 | Rahmenteil |
| 74 | Lasche |
| 75 | Bohrung |
| 76 | Bohrung |
| 78 | Führungswelle |
| 79 | Walze/Rolle |
| 80 | Umlenkrolle |
| 81 | Abdeckung |
| 82 | Schraube |
| 83 | Mutter |
| 84 | Befestigungselemente |
| 85 | Aufnahme |
| 86 | Seitliche Führung |
| 90 | Fortsatz |
| 92 | TAB-Führung |
| 100 | Behälterbehandlungsanlage |
| 105 | Steuerungs- und Regeleinheit |
| 110 | erste Behälterbehandlungseinrichtung |
| 120 | zweite Behälterbehandlungseinrichtung |
| 130 | Aufstellfläche |
| 360 | Stütze / Stab |
| 363 | Gasse |
| A | Abstand zwischen Speichermodulen |
| B | Breite der Speichermodule |
| D | Kettenhöhe |
| E | Ebene |
| I | Innerer Bereich |
| M | Zwischenmodul |
| ML | Modullänge |
| TR1 | erste Transportrichtung |
| TR2 | zweite Transportrichtung |
| V | vertikale Richtung |
| X | X-Koordinatenrichtung |
| Y | Y-Koordinatenrichtung |

## Patentansprüche

1. Speichervorrichtung (1) für Behälter (2), die nach dem First In - First Out Prinzip arbeitet, mit
mindestens einem Einlaufband (31 E), das entlang einer einlaufenden Richtung (TR1) antreibbar ist;
mindestens einem Auslaufband (32A), das entlang einer auslaufenden Richtung (TR2) antreibbar ist;
einem Speichermodul (30), gebildet aus den parallel zueinander angeordneten mindestens einem Einlaufband (31 E) und mindestens einem Auslaufband (32A), mit einer Breite (B) und einem ersten Rand (30₁), an dem das Einlaufband (31 E) des Speichermoduls (30) für die Behälter (2) vorgesehen ist, und einem zweiten Rand (30₂), an dem ein Auslaufband (32A) für die Behälter (2) vorgesehen ist;
einer Überleiteinheit (36), die eine äußere Führung (37) besitzt, so dass die Behälter (2) vom Einlaufband (31 E) auf das Auslaufband (32A) des Speichermoduls (30) überleitbar sind; und
einer Verschiebeeinheit (35), mittels der die Überleiteinheit (36) abhängig von einer erforderlichen Speicherkapazität in der Speichervorrichtung (1) parallel entlang des Einlaufbands (31 E) bzw. des Auslaufbandes (32A) verschiebbar ist; wobei
zwischen dem Einlaufband (31 E) und dem Auslaufband (32A) des Speichermoduls (30) mindesten ein weiteres, antreibbares Transferband (9, 31; 32;) derart angeordnet ist und sich im wesentlichen zur gesamten Länge (L) des Speichermoduls (30) parallel erstreckt, wobei jedes weitere Transferband (9, 31, 32) einen Antrieb (52, 53, 54, 56) für eine Transportrichtung (TR1, TR2) aufweist.
**dadurch gekennzeichnet, dass**
für das mindestens eine weitere Transferband (9, 31, 32) und für die Verschiebeeinheit (35) verschiedene Antriebe (52, 53, 54, 56) vorgesehen sind, welche so ausgestaltet sind, dass ein individuell steuerbarer Antrieb des weiteren Transferbandes (9, 31, 32) bzw. der Verschiebeeinheit (35) gewährleistet ist.

2. Speichervorrichtung (1) nach Anspruch 1, wobei mindestens zwei Speichermodule (30) parallel zueinander und in einer Ebene (E) angeordnet sind, wobei jeweils eine Transfereinrichtung (40) zwischen den zwei parallel zueinander angeordneten Speichermodulen (30) vorgesehen ist, so dass die Behälter (2) vom Auslaufband (32A) eines anfänglichen Speichermoduls (30A) auf das Einlaufband (31 E) eines nachfolgenden Speichermoduls (30N) überführbar sind.

3. Speichervorrichtung (1) nach einem der Anspruche 1 oder 2, wobei die mindestens zwei Speichermodule (30) parallel und mit einem Abstand (A) zueinander angeordnet sind.

4. Speichervorrichtung (1) nach Anspruch 3, wobei im Abstand (A) zwischen den mindestens zwei parallelen Speichermodulen (30) eine Abdeckung (21) eingesetzt ist.

5. Speichervorrichtung (1) nach Anspruch 3, wobei im Abstand (A) zwischen den mindestens zwei parallelen Speichermodulen (30) mindestens ein Band (22) eingesetzt ist, das entlang der einlaufenden Richtung (TR1) antreibbar ist, um umgefallene Behälter (2) aus der Speichervorrichtung (1) zu fördern.

6. Speichervorrichtung (1) nach einem der vorangehenden Ansprüche, wobei die Speichervorrichtung (1) aus einem Stirnmodul (33), einem Endmodul (34) und mindestens einem Zwischenmodul (M) aufgebaut ist.

7. Speichervorrichtung (1) nach einem der vorangehenden Ansprüche, wobei eine Länge (L) der Speichervorrichtung (1) mittels einzelner Zwischenmodule (M) mit konstanter Modullänge (ML) gebildet ist.

8. Speichervorrichtung (1) nach einem der vorangehenden Ansprüche, wobei drei Speichermodule (30) die Speichervorrichtung (1) bilden.

9. Speichervorrichtung (1) nach Anspruch 3, wobei zwischen jeweils zwei parallel zueinander angeordneten und aufeinanderfolgenden Speichermodulen (30) eine Transfereinrichtung (40) vorgesehen ist, die aus einer Endloskette (7) mit einer am Stirnmodul (33) angebrachten oberen Umlenkung (44) und unteren Umlenkung (45) besteht, die derart in der Speichervorrichtung (1) angeordnet sind, dass die Endloskette (7) das Auslaufband (32A) des anfänglichen Speichermoduls (30A) und das Einlaufband (31 E) eines letzten Speichermoduls (30L) bildet.

10. Speichervorrichtung (1) nach Anspruch 3, wobei zwischen mindestens drei parallel zueinander angeordneten und aufeinanderfolgenden Speichermodulen (30) jeweils eine Transfereinrichtung (40) vorgesehen ist, die aus einer Endloskette (7) mit einer am Stirnmodul (33) angebrachten oberen Umlenkung (44) und unteren Umlenkung (45) besteht, die derart in der Speichervorrichtung (1) angeordnet sind, dass die Endloskette (7) das Auslaufband (32A) des anfänglichen Speichermoduls (30A) und das Einlaufband (31 E) mindestens eines mittleren nachfolgenden Speichermoduls (30N) und dass das Auslaufband (32A) mindestens eines mittleren nachfolgenden Speichermoduls (30N) das Einlaufband (31 E) eines letzten Speichermoduls (30N) bildet.

11. Speichervorrichtung (1) nach einem der Ansprüche 3 bis 10, wobei innerhalb der durch die Speichermodule (30) gebildeten Ebene (E) mindestens zwei Verschiebeeinheiten (35) vorgesehen sind, an denen jeweils ein Jalousieband (5) montiert ist und worauf die mindestens eine Überleiteinheit (36) sitzt.

12. Speichervorrichtung (1) nach Anspruch 11, wobei das Jalousieband (5) jeweils zwischen dem Einlaufband (31 E) und dem Auslaufband (32A) eines Speichermoduls (30) vorgesehen ist.

13. Speichervorrichtung (1) nach Anspruch 12, wobei das Jalousieband (5) jeweils mittig in den einzelnen Speichermodulen (30) angeordnet ist.

14. Speichervorrichtung (1) nach Anspruch 13, wobei das Jalousieband (5) eine seitliche Führung für die benachbarten Transportbänder aufweist.

15. Verfahren zum Speichern von Behältern (2) nach dem First In - First Out Prinzip mittels einer Speichervorrichtung (1) gemäß den Ansprüchen 1 bis 14.

## Claims

1. A storage device (1) for containers (2) which operates according to the First In - First Out principle with
at least one infeed belt (31 E) which can be driven along an infeed direction (TR1);
at least one discharge belt (32A) which can be driven along a discharge direction (TR2);
a storage module (30) formed from the at least one infeed belt (31 E) and the at least one discharge belt (32A) which are arranged parallel to each other, with a width (B) and a first edge (30₁) at which the infeed belt (31 E) of the storage module (30) for the containers (2) is provided and a second edge (30₂) at which a discharge belt (32A) for the containers (2) is provided;
a transition unit (36) which has an outer guide (37) so that the containers (2) can be transferred over from the infeed belt (31 E) to the discharge belt (32A) of the storage module (30); and
a shifting unit (35) by means of which the transition unit (36) can be shifted parallel to the infeed belt (31 E) or the discharge belt (32A) depending on a storage capacity required in the storage device (1); wherein
there is at least one further drivable transfer belt (9, 31; 32) arranged between the infeed belt (31 E) and the discharge belt (32A) of the storage module (30) in such a way that it essentially extends in parallel along the complete length (L) of the storage module (30), wherein every further transfer belt (9, 31, 32) has a drive (52, 53, 54, 56) for a direction of transport (TR1, TR2).
**characterized in that**
different drives (52, 53, 54, 56) are provided for the at least one further transfer belt (9, 31, 32) and for the shifting unit (35) which are fitted out in such a way that an individually controllable drive is achieved for the further transfer belt (9, 31, 32) or the shifting unit (35).

2. The storage device (1) according to Claim 1, wherein at least two storage modules (30) are arranged parallel to each other and in a plane (E), wherein a transfer device (40) is respectively arranged between the two storage modules (30) arranged parallel to each other so that the containers (2) can be transferred over from a discharge belt (32A) of an initial storage module (30A) to the infeed belt (31 E) of the next storage module (30N).

3. The storage device (1) according to any one of the claims 1 or 2, wherein the at least two storage modules (30) are arranged in parallel and with a distance (A) between them.

4. The storage device (1) according to Claim 3 wherein a cover (21) is inserted at a distance (A) between the at least two parallel storage modules (30)

5. The storage device (1) according to Claim 3, wherein at least one belt (22) is inserted at a distance (A) between the at least two parallel storage modules (30) which can be driven along the infeed direction (TR1) in order to convey fallen containers (2) out of the storage device (1).

6. The storage device (1) according to any one of the preceding claims, wherein the storage device (1) comprises a front module (33), an end module (34) and at least one intermediate module (M).

7. The storage device (1) according to any one of the preceding claims, wherein a length (L) of the storage device (1) is formed by individual intermediate modules (M) with a constant module length (ML).

8. The storage device (1) according to any one of the preceding claims, wherein three storage modules (30) form the storage device (1).

9. The storage device (1) according to Claim 3, wherein a transfer device (40) is respectively provided between two storage modules (30) which are arranged parallel to each other and are consecutive, which consists of an endless chain (7) with an upper deflecting device (44) and a lower deflecting device (45) attached to the front module (33), which are arranged in the storage device (1) in such a way that the endless chain (7) forms the discharge belt (32A) of the initial storage module (30A) and the infeed belt (31 E) of a last storage module (30L).

10. The storage device (1) according to Claim 3, wherein a transfer device (40) is provided between at least three storage modules (30) which are arranged parallel to each other and are successive, which consists of an endless chain (7) with an upper deflecting device (44) and a lower deflecting device (45) attached to the front module (33), which is arranged in the storage device (1) in such a way that the endless chain (7) forms the discharge belt (32A) of the initial storage module (30A) and the infeed belt (31 E) of at least one central next storage module (30N) and that the discharge belt (32A) of at least one central next storage module (30N) forms the infeed belt (31 E) of a last storage module (30N).

11. The storage device (1) according to any one of the claims 3 to 10, wherein at least two shifting units (35) are provided within the plane (E) formed by the storage modules (30) at which one blind strap (5) is mounted respectively and on which at least one transition unit (36) sits.

12. The storage device (1) according to Claim 11, wherein the blind strap (5) is respectively provided between the infeed belt (31 E) and the discharge belt (32A) of a storage module (30).

13. The storage device (1) according to Claim 12, wherein the blind strap (5) is respectively arranged centrally in the individual storage modules (30).

14. The storage device (1) according to Claim 13, wherein the blind strap (5) has a guide on the side for the neighboring transport belts.

15. A method for storing containers (2) according to the First In - First Out principle using a storage device (1) according to the claims 1 to 14.

## Revendications

1. Dispositif de stockage (1) pour récipients (2) qui fonctionne selon le principe First In - First Out, avec
au moins une bande d'entrée (31 E) pouvant être entraînée le long d'un sens d'entrée (TR1) ;
au moins une bande de sortie (32A) pouvant être entraînée le long d'un sens de sortie (TR2) ;
un module de stockage (30), formé à partir des au moins une bande d'entrée (31E) et au moins une bande de sortie (32A) disposées parallèlement l'une par rapport à l'autre, avec une largeur (B) et un premier bord (30₁) auquel est prévue la bande d'entrée (31 E) du module de stockage (30) pour les récipients (2), et un deuxième bord (30₂) auquel est prévue une bande de sortie (32A) pour les récipients (2) ;
une unité de transition (36) qui possède un guidage extérieur (37), de manière à ce que les récipients (2) puissent être transférés de la bande d'entrée (31 E) sur la bande de sortie (32A) du module de stockage (30) ; et
une unité de décalage (35) au moyen de laquelle l'unité de transition (36) peut être déplacée, en fonction d'une capacité de stockage nécessaire dans le dispositif de stockage (1), parallèlement le long de la bande d'entrée (31 E) resp. de la bande de sortie (32A) ; étant donné que
au moins une autre bande de transfert (9, 31; 32) entraînable est disposée entre la bande d'entrée (31E) et la bande de sortie (32A) du module de stockage (30) de manière à s'étendre essentiellement parallèlement à la longueur entière (L) du module de stockage (30), étant donné que chaque autre bande de transfert (9, 31, 32) présente un entraînement (52, 53, 54, 56) pour un sens de transport (TR1, TR2),
**caractérisé en ce que**
sont prévus pour la au moins une autre bande de transfert (9, 31, 32) et pour l'unité de décalage (35) différents entraînements (52, 53, 54, 56) qui sont conçus de manière à ce qu'un entraînement à commande individuelle de l'autre bande de transfert (9, 31, 32) resp. de l'unité de décalage (35) soit garanti.

2. Dispositif de stockage (1) selon la revendication 1, étant donné qu'au moins deux modules de stockage (30) sont disposés parallèlement l'un par rapport à l'autre et dans un plan (E), étant donné qu'est chaque fois prévu un équipement de transfert (40) entre les deux modules de stockage (30) disposés parallèlement l'un par rapport à l'autre, de manière à ce que les récipients (2) puissent être transférés de la bande de sortie (32A) d'un module de stockage initial (30A) sur la bande d'entrée (31 E) d'un module de stockage subséquent (30N).

3. Dispositif de stockage (1) selon l'une quelconque des revendications 1 ou 2, étant donné que les au moins deux modules de stockage (30) sont disposés parallèlement et avec un écartement (A) l'un par rapport à l'autre.

4. Dispositif de stockage (1) selon la revendication 3, étant donné qu'une chape (21) est insérée dans l'écartement (A) entre les au moins deux modules de stockage parallèles (30).

5. Dispositif de stockage (1) selon la revendication 3, étant donné qu'au moins une bande (22) est insérée dans l'écartement (A) entre les au moins deux modules de stockage parallèles (30), bande (22) pouvant être entraînée le long du sens d'entrée (TR1) afin d'acheminer hors du dispositif de stockage (1) les récipients (2) tombés.

6. Dispositif de stockage (1) selon l'une quelconque des revendications précédentes, étant donné que le dispositif de stockage (1) se compose d'un module frontal (33), un module terminal (34) et au moins un module intermédiaire (M).

7. Dispositif de stockage (1) selon l'une quelconque des revendications précédentes, étant donné qu'une longueur (L) du dispositif de stockage (1) est formée au moyen de modules intermédiaires individuels (M) de longueur de module constante (ML).

8. Dispositif de stockage (1) selon l'une quelconque des revendications précédentes, étant donné que trois modules de stockage (30) forment le dispositif de stockage (1).

9. Dispositif de stockage (1) selon la revendication 3, étant donné qu'est chaque fois prévu entre deux modules de stockage (30) disposés parallèlement l'un par rapport à l'autre et l'un à la suite de l'autre un équipement de transfert (40) qui se compose d'une chaîne continue (7) avec un renvoi supérieur (44) et un renvoi inférieur (45) installés sur le module frontal (33) et disposés dans le dispositif de stockage (1) de manière à ce que la chaîne continue (7) forme la bande de sortie (32A) du module de stockage initial (30A) et la bande d'entrée (31 E) d'un dernier module de stockage (30L).

10. Dispositif de stockage (1) selon la revendication 3, étant donné qu'est prévu entre au moins trois modules de stockage (30) disposés parallèlement l'un par rapport à l'autre et l'un à la suite de l'autre un équipement de transfert (40) qui se compose d'une chaîne continue (7) avec un renvoi supérieur (44) et un renvoi inférieur installés (45) sur le module frontal (33) et disposés dans le dispositif de stockage (1) de manière à ce que la chaîne continue (7) forme la bande de sortie (32A) du module de stockage initial (30A) et la bande d'entrée (31 E) d'au moins un module de stockage central subséquent (30N) et que la bande de sortie (32A) d'au moins un module de stockage central subséquent (30N) forme la bande d'entrée (31 E) d'un dernier module de stockage (30N).

11. Dispositif de stockage (1) selon l'une quelconque des revendications 3 à 10, étant donné que sont prévus au sein du plan (E) formé par les modules de stockage (30) au moins deux unités de décalage (35) sur lesquelles est chaque fois montée une bande de store (5) et sur lesquelles est logée la au moins une unité de transition (36).

12. Dispositif de stockage (1) selon la revendication 11, étant donné que la bande de store (5) est prévue chaque fois entre la bande d'entrée (31 E) et la bande de sortie (32A) d'un module de stockage (30).

13. Dispositif de stockage (1) selon la revendication 12, étant donné que la bande de store (5) est chaque fois disposée centralement dans les modules de stockage (30) individuels.

14. Dispositif de stockage (1) selon la revendication 13, étant donné que la bande de store (5) comporte un guidage latéral pour les bandes transporteuses adjacentes.

15. Procédé de stockage de récipients (2) selon le principe First In - First Out au moyen d'un dispositif de stockage (1) selon les revendications 1 à 14.
